# FASCICULE DE BREVET EUROPEEN

(11) **EP 0 689 320 B1**
(45) Date de publication et mention de la délivrance du brevet: **26.02.2003**
(21) Numéro de dépôt: 95401449.4
(22) Date de dépôt: 20.06.1995
(51) Int. Cl.: H04L 12/56, H04Q 11/04

(54) **Procédé et dispositifs pour l'acheminement de paquets de données dans un réseau multisite**
Verfahren und Anlagen für Leitweglenkung von Datenpaketen in einem verteilten Netzwerk
Method and devices for data packet routing in a multisite network

(30) Priorité: 22.06.1994 FR 9407656
(43) Date de publication de la demande: 27.12.1995
(73) Titulaire: ALCATEL, 75382 Paris Cédex 08 (FR); FRANCE TELECOM, 75015 Paris (FR)
(72) Inventeur: Quinquis, Jean Paul, F-22301 Lannion Cedex (FR); Francois, Joel, F-22301 Lannion Cedex (FR); Hamidi, Ridha, F-22301 Lannion Cedex (FR); Le Padellec, Philippe, F-29470 Loperhet (FR)
(74) Mandataire: Schaub, Bernard

(56) Documents cités:
- PATENT ABSTRACTS OF JAPAN vol. 17 no. 629 (E-1462) ,19 Novembre 1993 & JP-A-05 199228 (OKI ELECTRIC IND CO LTD) 6 Août 1993,
- PATENT ABSTRACTS OF JAPAN vol. 17 no. 328 (E-1385) ,22 Juin 1993 & JP-A-05 037547 (FUJITSU LTD) 12 Février 1993,
- COMPUTER COMMUNICATIONS, vol. 16, no. 10, Octobre 1993 JORDAN HILL, pages 662-666, XP 000394160 W.-T. CHEN 'Efficient multicast source routing scheme.'

## Description

Le domaine de l'invention est celui, de façon générale, des échanges de données dans des systèmes de communication structurés, dans lesquels les communications se font par échange de paquets de données. Un domaine particulier d'application de l'invention est ainsi les systèmes mettant en oeuvre la technique dite ATM ("Asynchronous Transfer Mode" ou Mode de Transfert Asynchrone), selon laquelle les paquets échangés sont de taille fixe, et désignés par le terme de cellule.

Le document JP-A-05 199228 décrit un système de routage pour des données transmises par l'intermédiaire d'un réseau public entre des terminaux de réseaux de zone locale LAN.

L'invention concerne le routage des cellules (ou plus généralement des paquets) dans un réseau privé, et notamment dans un réseau constitué de plusieurs sites distants, et interconnectés par un réseau public.

De façon classique, un paquet comprend au moins deux champs, un en-tête et un champ de données. Le champ de données comprend les données utiles à la communication. L'en-tête comprend notamment des données de routage, permettant, d'assurer le transfert du paquet de l'émetteur vers le destinataire, via les différents noeuds constituant le réseau de communication. Cet en-tête a un format prédéfini, pour qu'il puisse être interprété par tous les noeuds du réseau, et doit être le plus limité possible, de façon à laisser disponible le plus possible de place aux données utiles à l'application.

Par ailleurs, on sait que les réseaux privés et les réseaux publics ont des exigences différentes, en terme d'informations de routage, ne serait ce que du fait du nombre beaucoup plus important de communications gérées par un réseau public. Ainsi, la technique ATM prévoit une organisation du réseau à deux niveaux de conduits virtuels (VP, pour "virtual path" et les voies virtuelles (VC, pour "virtual channel"). D'une façon générale, les conduits sont établis et gérés de manière semi-permanente, comme le sont les ressources de transmission, sous le contrôle de mécanismes d'administration du réseau public. En revanche, les voies sont établies sous le contrôle de mécanismes de traitement des appels et des connexions.
En d'autres termes, les conduits, qui sont identifiés dans l'en-tête de chaque cellule par un champ d'identification de conduit virtuel VPI (pour "Virtual Path Identifier" en anglo-saxon), ne sont gérés que par le réseau public, au niveau de brasseurs. Les voies sont quant à elles identifiées par un champ d'identification de voie virtuelle VCI (pour "Virtual Channel Identifier" en anglo-saxon), permettant de gérer la commutation des cellules.

Dans un réseau privé, seule la notion de voie virtuelle est mise en oeuvre. On comprend donc que le champ VPI est inutile, au niveau du réseau privé, mais nécessaire dès qu'une communication emprunte le réseau public.

Un objectif général de l'invention est de fournir un procédé d'optimisation de l'utilisation des éléments binaires formant l'entête d'un paquet, notamment pour le routage de ce paquet vers son destinataire.

Ainsi, un objectif de l'invention est de fournir un tel procédé, permettant la réutilisation au niveau privé d'un champ d'entête prévu pour n'être exploité que sur le réseau public, tel que le champ VPI de la norme ATM, tout en assurant la pérennité de ce champ, dès qu'un passage sur le réseau public est nécessaire.

En d'autres termes, l'invention a pour objectif de fournir un tel procédé, permettant une double utilisation d'un même champ de l'entête d'un paquet, selon que celui-ci se trouve sur un réseau public ou privé, et assurant la restauration de ce champ à chaque passage du réseau privé vers le réseau public et réciproquement

En d'autres termes encore, un objectif de l'invention est d'élargir les possibilités d'utilisation de l'entête d'un paquet, sans augmenter la taille de cet entête, ni modifier de façon trop importante sa structure.

Un objectif particulier de l'invention est ainsi de fournir un tel procédé, permettant le routage de paquets vers un nombre important de stations. Notamment, l'invention a pour objectif de fournir un tel procédé permettant, dans les systèmes selon la technique ATM, d'adresser un nombre plus élevé de stations que les procédés connus, qu'il s'agisse du routage classique par le champ VCI ou de la technique dite de l'autoroutage.

Selon la norme ATM, chaque cellule entrant dans une matrice de commutation du réseau fait l'objet de traitements qui consistent entre autres à lire son entête (plus précisément le contenu du champ VCI et/ou du champ VPI) afin de déterminer dans quelle direction elle doit être aiguillée en sortie.

Ces informations associées au numéro du multiplex d'entrée par lequel est arrivée la cellule forment un ensemble qui constitue l'adresse de la mémoire de traduction de la matrice. Les données lues sont, d'une part le ou les numéros des multiplex par lesquels la cellule doit être émise en sortie, d'autre part le ou les nouveaux codes de VCI (ou de VPI). La première opération est dite aiguillage, la seconde est dite traduction.

Par nature, un multiplex ATM supporte un nombre important de communications acheminées simultanément. Ces communications sont routées à travers des connexions virtuelles identifiées par les champs VCI. Sur un multiplex donné, toutes les connexions virtuelles qui portent le même VCI appartiennent à la même communication.

La norme définissant un champ VCI de 16 bits, le nombre maximum de connexions virtuelles routées simultanément sur un même multiplex est de l'ordre de 65 000, ce qui correspond à une taille de mémoire de traduction de 16 X 65 000 mots de 32 bits (au minimum) pour une matrice ATM de 16 multiplex entrants et 16 multiplex sortants.

Outre l'inconvénient de nécessiter une mémoire de traduction de taille importante, par conséquent coûteuse en surface de silicium, cette technique de routage met en oeuvre des échanges de messages (marquage) avec un processeur de commande au cours des phases d'établissement et de rupture de chaque connexion. Ces échanges sont nécessaires avec toutes les matrices de commutation situées sur le chemin que devront parcourir les cellules de la connexion virtuelle à établir. Or le nombre de couches de commutation qui relient les terminaux entre lesquels une communication est à établir peut, dans certains cas être important car ce nombre dépend de l'importance du site, du chemin suivi, de la topologie du réseau.

L'utilisation de matrices de tailles importantes (par exemple 16 X 16) est parfaitement compatible avec ces exigences, dans la mesure où:
a) le rapport entre le volume de mémoire de traduction exigé et l'encombrement de la matrice (une ou 2 cartes) reste très favorable,
b) les phases de marquage ne concernent qu'un nombre limité d'équipements de commutation.

En revanche, dès l'instant ou diverses raisons (topologie, modularité, maintenance, évolutivité,...) justifient la mise en oeuvre d'équipements de commutation de taille réduite (allant jusqu'au composant unique), la question de réduire les tailles de mémoires de traduction se pose effectivement.

La technique de l'autoroutage ne fait pas l'objet d'une norme, mais est néanmoins largement utilisée sous des formes très diverses. Dans le principe, elle consiste à coder explicitement dans un champ de l'en-tête d'une cellule la liste des numéros des liens par lesquelles cette cellule doit être routée.

L'inconvénient de cette technique, dite à étiquette consommable, est qu'elle nécessite un champ dont la longueur est proportionnelle au nombre de couches de commutation à traverser : elle doit par conséquent être réservée à des réseaux de taille réduite.

A titre d'exemple, un champ de 16 bits ne permet de coder que les traversées successives de 4 matrices 16 X 16 (4 bits pour coder un multiplex de sortie parmi 16). Cet inconvénient peut cependant être contourné à l'aide de différentes solutions.

Une première solution consiste à exploiter les 24 bits que représente l'ensemble du champ VPI et champ VCI. Elle présente un double inconvénient, à savoir la nécessité d'une logique d'analyse du routage spécifique dans les matrices et l'impossibilité de superposer un 2ème niveau de routage par VCI ou VPI.

Une seconde solution consiste à encapsuler l'entête de 5 octets (taille normalisée) avec des octets supplémentaires, par exemple 3 octets.

Une autre fait appel à une approche mixte : autoroutage puis traduction (c'est-à-dire mise à jour de l'étiquette d'autoroutage) puis autoroutage etc...

La technique par autoroutage des cellules supprime la phase de marquage de mémoires de traduction devenue inutile. Elle permet en outre sinon de simuler les mémoires de traduction, du moins d'en réduire notablement les capacités.

Un autre avantage de l'autoroutage est qu'il offre à peu de frais la possibilité d'exploiter rapidement des chemins de secours pour le transfert de données en cas de panne locale ou d'engorgement au niveau du trafic. Il suffit en effet de changer le contenu de l'adresse d'autoroutage dans le terminal émetteur pour que les cellules de la connexion virtuelle soient acheminées sur un chemin différent qui puisse contourner l'obstacle ; l'adresse d'autoroutage ayant été bien entendu au préalable mémorisée au niveau de l'équipement émetteur de cellules.

L'invention a encore pour objectif de proposer un procédé présentant les avantages de l'autoroutage, sans en avoir les inconvénients.

Notamment, un objectif de l'invention est de fournir un tel procédé permettant de couvrir un réseau de taille compatible avec les exigences des sites privés, tout en maintenant l'intégrité des champs définis dans la norme, tel que les champs VCI et VPI dans le cas de l'ATM.

Un autre objectif de l'invention est de fournir un tel procédé qui soit compatible avec tous les types de réseau (en anneau simple ou double, en bus, en étoile...), et toutes les combinaisons de réseaux. En particulier, un objectif de l'invention est de fournir un tel réseau, permettant de façon simple l'interconnexion d'une pluralité de sous-réseaux, soit directement, soit par l'intermédiaire du réseau public.

Encore un objectif de l'invention est de fournir un tel procédé, permettant l'utilisation de mémoires de traduction de petite capacité : ce qui permet l'intégration d'entités de commutation de taille réduite, par exemple sous la forme de composants de type ASIC. L'utilisation de composants de commutation de taille réduite offre de nombreux avantages, tels que la modularité et la production en grande série, donc l'optimisation des coûts de fabrication, d'installation et de maintenance, et la linéarité des coûts d'exploitation, ainsi que la mise en oeuvre d'architectures de réseaux très diverses: en particulier les réseaux de distribution peuvent être bâtis selon des topologies centralisées mais aussi géographiquement distribuées, par exemple en boucles, bus ou arbres.

L'invention a également pour objectif de fournir un tel procédé, qui ne fasse pas appel à un mécanisme d'auto-routage spécifique, c'est-à-dire à du matériel supplémentaire dans les matrices de commutation. En d'autres termes, un objectif de l'invention est d'utiliser des matrices conformes à la norme, et donc compatibles avec une utilisation dans les équipements de commutation et de multiplexage du réseau public.

Ces objectifs, ainsi que d'autres qui apparaîtront par la suite, sont atteints selon l'invention par un procédé d'acheminement de données organisées en paquets de données, dans un réseau multisite d'échange de données organisées en paquets de données, du type comprenant au moins deux sites distants organisés chacun en sous-réseaux privés comprenant une pluralité de terminaux susceptibles d'émettre et/ou de recevoir des paquets, et interconnectés par l'intermédiaire d'un réseau public brassé, chacun des paquets comprenant un en-tête et un champ de données, ledit en-tête comprenant au moins deux identificateurs définissant, vu dudit réseau public, un double niveau de hiérarchie d'accès, un premier identificateur, dit identificateur de voie virtuelle (VCI), permettant le contrôle de la commutation des paquets dans les sous-réseaux privés, ainsi qu'un second identificateur, dit identificateur de conduit virtuel (VPI), permettant le contrôle du brassage des paquets dans le réseau public. Selon une caractéristique du procédé selon l'invention, on attribue audit identificateur de conduit virtuel un double rôle de :
- contrôle du brassage du paquet, lorsque celui-ci circule sur ledit réseau public ; et
- gestion d'un mécanisme de routage du paquet, lorsque celui-ci circule sur l'un desdits sous-réseaux privés.

A chaque transfert d'un paquet d'un desdits sous-réseaux privés vers ledit réseau public, une donnée de routage contenue dans ledit identificateur de conduit virtuel est décalée dans une portion réservée dudit identificateur de voie virtuelle, et remplacée par une donnée de contrôle de brassage.

A chaque transfert d'un paquet dudit réseau public vers un desdits sous-réseaux privés, ladite donnée de contrôle du brassage est effacée, et ladite donnée de routage contenue dans ladite portion réservée dudit identificateur de voie virtuelle est restaurée par décalage dans ledit identificateur de conduit virtuel.

En d'autres termes, une zone de l'en-tête de chaque cellule, ou paquet, et plus précisément du VCI, est réservée, pour servir de zone de stockage temporaire du contenu "privé" du VPI, tant que la cellule circule sur le réseau public brassé.

A chaque passage du réseau public sur le réseau privé et inversement, le VPI est modifié de façon à correspondre au rôle qui lui est attribué.

Ainsi, l'adressage sur le réseau est facilité, puisque les deux champs VPI et VCI peuvent être utilisés.

Cela permet par exemple de définir deux niveaux d'adressage au niveau de ce réseau privé.

Selon un mode de réalisation préférentiel de l'invention, lesdits paquets sont des cellules ATM, et:
- ledit identificateur de conduit virtuel est constitué de 12 bits, les quatre bits de poids fort étant forcés à une valeur prédéterminée (en d'autres termes, seuls les 8 bits de poids faible sont utilisés) ;
- ledit identificateur de voie virtuelle est constitué de 16 bits, les huit bits de poids fort étant réservés pour le stockage de ladite donnée de routage.

Ce sont ces 8 bits réservés qui permettent la mise en oeuvre du procédé de l'invention.

Avantageusement, lesdits sites distants comprennent un site principal et au moins deux sites secondaires, toute communication entre deux desdits sites secondaires transitant par ledit site principal.

Ainsi que cela apparaîtra plus clairement par la suite, cette technique permet de réduire le nombre de conduits permanents à établir dans le réseau public.

De façon préférentielle, les opérations de modification du contenu dudit identificateur de conduit virtuel sont réalisées de façon matérielle, dans des équipements d'interface dédiés de chaque site.

Selon un mode de réalisation préférentiel de l'invention, chaque sous-réseau privé comprend :
- une pluralité de noeuds de commutation reliés deux à deux par au moins un support d'échange de données, chacun desdits noeuds desservant un concentrateur gérant chacun au moins un terminal de traitement de données susceptible d'émettre et/ou de recevoir des paquets de données ; un module d'interface assurant la connexion entre ledit sous-réseau privé et ledit réseau public, et le procédé comprend les étapes suivantes:

- émission d'un paquet de données par un terminal émetteur vers son concentrateur associé, dit concentrateur émetteur, à destination d'un terminal récepteur, ledit paquet portant un indicateur de voie virtuelle VCI local (VC-La) et un indicateur de conduit virtuel VPI local (VP-La) alloué par ledit terminal émetteur pour la durée d'une communication ;
- dans ledit concentrateur émetteur, traduction dudit indicateur de voie virtuelle VCI local en un indicateur de voie virtuelle VCI (VC-Sa) alloué par ledit terminal récepteur pour la durée d'une communication;
- dans ledit concentrateur émetteur, traduction dudit indicateur de conduit virtuel VPI local en un indicateur de conduit virtuel VPI (VP-Sa) alloué de façon permanente audit terminal récepteur; si ledit terminal récepteur appartient au même sous-réseau que ledit terminal émetteur:

- routage dudit paquet vers le concentrateur associé audit terminal récepteur, dit concentrateur récepteur, via lesdits noeuds de commutation, par analyse dudit indicateur de conduit virtuel VPI ;
- routage vers ledit terminal récepteur, par analyse dudit indicateur de voie virtuelle VCI dans ledit concentrateur récepteur ;
- si ledit terminal récepteur appartient à un autre sous-réseau :

- routage dudit paquet vers le module d'interface du sous-réseau dudit terminal émetteur, via lesdits noeuds de commutation, par analyse dudit indicateur de conduit virtuel VPI ;
- dans ledit module d'interface, décalage du contenu dudit indicateur de conduit virtuel VPI (VP-Sa) dans une portion réservée dudit indicateur de voie virtuelle VCI et inscription dans ledit indicateur de conduit virtuel VPI d'une information (VP-Bx) de gestion du brassage sur le réseau public ;
- transmission par ledit module d'interface vers le sous-réseau dudit terminal récepteur dudit paquet, via ledit réseau public ;
- réception dudit paquet dans le module d'interface du sous-réseau dudit terminal récepteur ;
- dans ledit module d'interface, décalage du contenu de ladite portion réservée dudit indicateur de voie virtuelle VCI vers ledit indicateur de conduit virtuel VPI (VP-Sa) ;
- routage dudit paquet vers le concentrateur associé audit terminal récepteur, dit concentrateur récepteur, via lesdits noeuds de commutation, par analyse dudit indicateur de conduit virtuel VPI (VP-Sa) ;
- routage vers ledit terminal récepteur, par analyse dudit indicateur de voie virtuelle VCI dans ledit concentrateur récepteur.

Avantageusement, ladite donnée de routage placée dans ledit identificateur de conduit virtuel est un identifiant désignant au moins un terminal récepteur, chacun desdits terminaux possédant un identifiant le désignant dans un sous-réseau donné, cet identifiant lui étant éventuellement propre, chaque réseau comprenant au moins deux unités de commutation, chaque unité comprenant une pluralité de noeuds de commutation reliés deux à deux par au moins un support d'échange de données et au moins un noeud de liaison avec une autre unité de commutation, par l'intermédiaire d'une passerelle de liaison.

On associe à chaque noeud de commutation, une mémoire contenant au moins un groupe d'au moins un identifiant correspondant à un ensemble d'au moins un terminal associé audit noeud et une matrice de commutation associant au moins une entrée à au moins deux sorties. Une première au moins de ces sorties correspond à au moins une desdites stations associées audit noeud et une seconde de ces sorties au moins correspond au noeud suivant sur ladite unité de commutation. Chaque matrice recevant un paquet sélectionne systématiquement une desdites secondes sorties de la matrice de commutation si l'identifiant du paquet ne correspond à aucun des identifiants contenus dans la mémoire, et une desdites premières sorties sinon.

Cette technique de routage présente plusieurs avantages. Notamment, elle permet d'adresser simplement un nombre élevé de noeuds. Elle repose sur l'emploi de matrices identiques à celles utilisées ailleurs dans les réseaux ATM. Enfin, elle ne nécessite aucune action sur le contenu des cellules dans chaque noeud, mais seulement une commutation.

Selon un mode de réalisation préférentiel, l'identifiant, que constitue une donnée de routage, comprend deux parties :
- une première partie désignant l'unité de commutation destinataire;
- une seconde partie désignant le terminal destinataire dans ladite unité de commutation destinataire ; de façon que, dans chaque noeud de liaison, on effectue les étapes suivantes:

- analyse de ladite première partie, et
- si le paquet doit être transmis par ledit noeud de liaison vers une autre unité de commutation, modification en conséquence de ladite première partie, et transmission dudit paquet.

Dans ce cas, avantageusement, chaque unité de commutation exploite un même jeu d'identifiants, correspondant à ladite seconde partie, et on additionne auxdits identifiants une valeur prédéterminée, correspondant à ladite première partie, pour désigner l'unité de commutation destinataire.

Préférentiellement, le procédé prévoit au moins un identifiant permettant une diffusion du paquet considéré vers au moins deux terminaux récepteurs. Il est ainsi possible de faire simplement de la diffusion, bien qu'il soit généralement considéré que la technique de l'autoroutage n'est pas compatible simplement avec la diffusion.

L'invention concerne également, un réseau de communication, multisite, d'échange de données organisées en paquets de données, du type incluant au moins deux sites distants organisés chacun en sous-réseaux privés comprenant une pluralité de terminaux susceptibles d'émettre et/ou de recevoir des paquets, et interconnectés par l'intermédiaire d'un réseau public brassé, ledit réseau de communications mettant en oeuvre un procédé d'acheminement de données organisées en paquets tel que décrit ci-dessus.

Selon l'invention, chacun des éléments de commutation que comporte le réseau de communications comprend une matrice de commutation associée à une mémoire de stockage d'un jeu d'identifiants.

Selon un mode de réalisation préférentiel au moins certaines desdites unités de commutation du réseau sont organisées selon une topologie à deux anneaux contrarotatifs.

D'autres caractéristiques et avantages de l'invention apparaîtront plus clairement à la lecture de la description suivante d'un mode de réalisation préférentiel de l'invention, donné à titre de simple exemple illustratif et non limitatif, et des dessins annexés dans lesquels:
- la figure 1 illustre en réseau multisite selon l'invention, comprenant un site principal et trois sites délocalisés reliés par le réseau public brassé ;
- la figure 2 présente les différents types de connexions qu'il est nécessaire de pouvoir établir dans le réseau de la figure 1 ;
- la figure 3 présente le début de l'entête d'une cellule ATM, selon le procédé de l'invention, avec une zone de décalage permettant une double utilisation du champ VPI ;
- la figure 4 est un synoptique général du procédé de l'invention, utilisant les cellules de la figure 3 ;
- les figures 5 à 8 illustrent le procédé de la figure 4, dans un mode de réalisation particulier, et plus particulièrement :

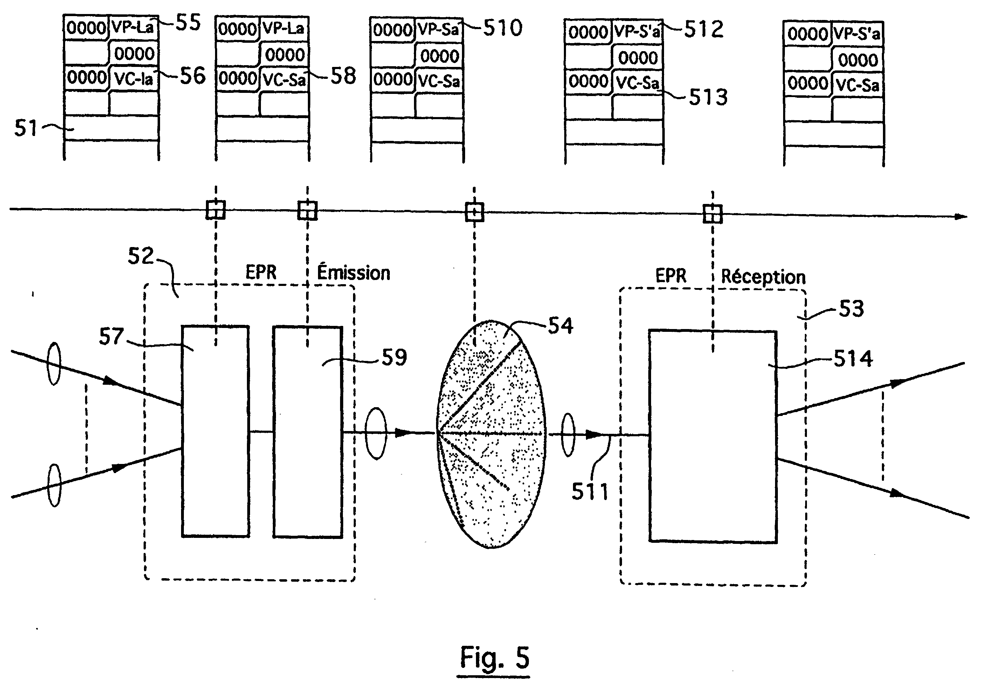

   - la figure 5 concerne un échange de cellule à l'intérieur du site principal ;

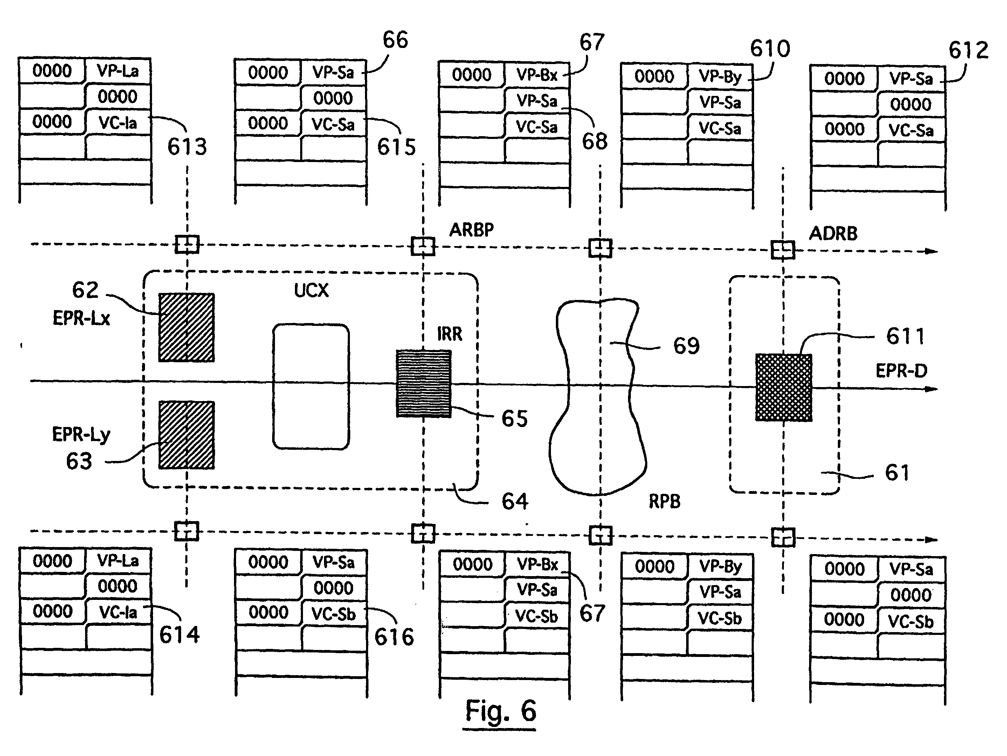

   - la figure 6 illustre le cas de deux connexions établies simultanément du site principal vers un même terminal d'une unité délocalisée ;

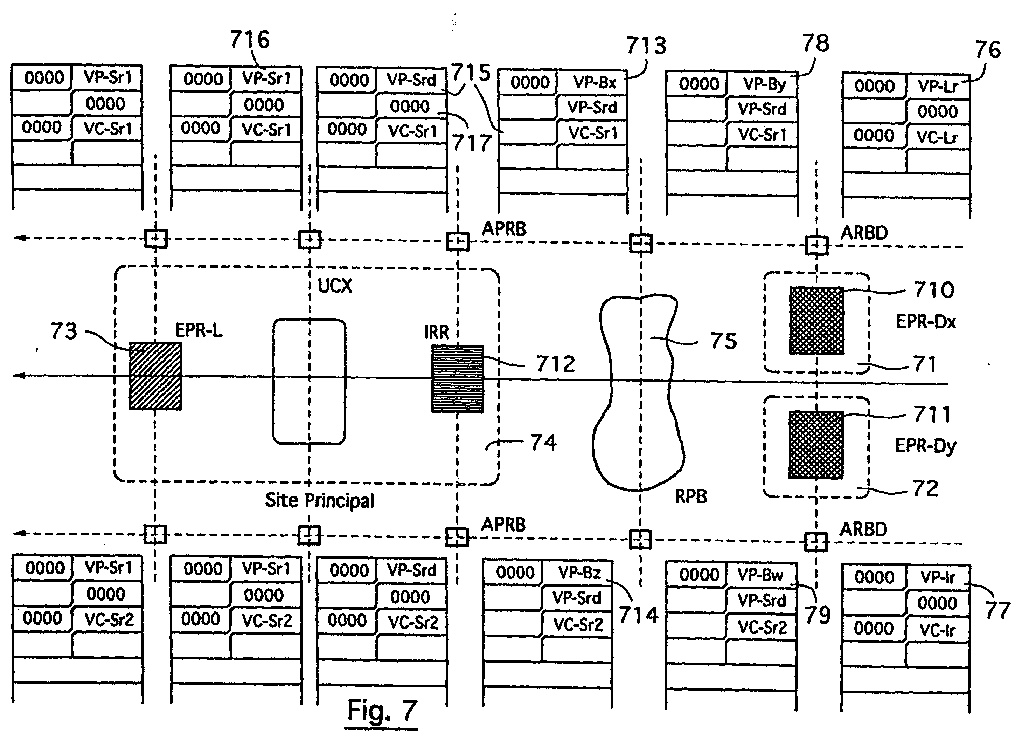

   - la figure 7 s'applique au cas de deux connexions vers un même terminal du site principal, à partir de deux terminaux délocalisés ;

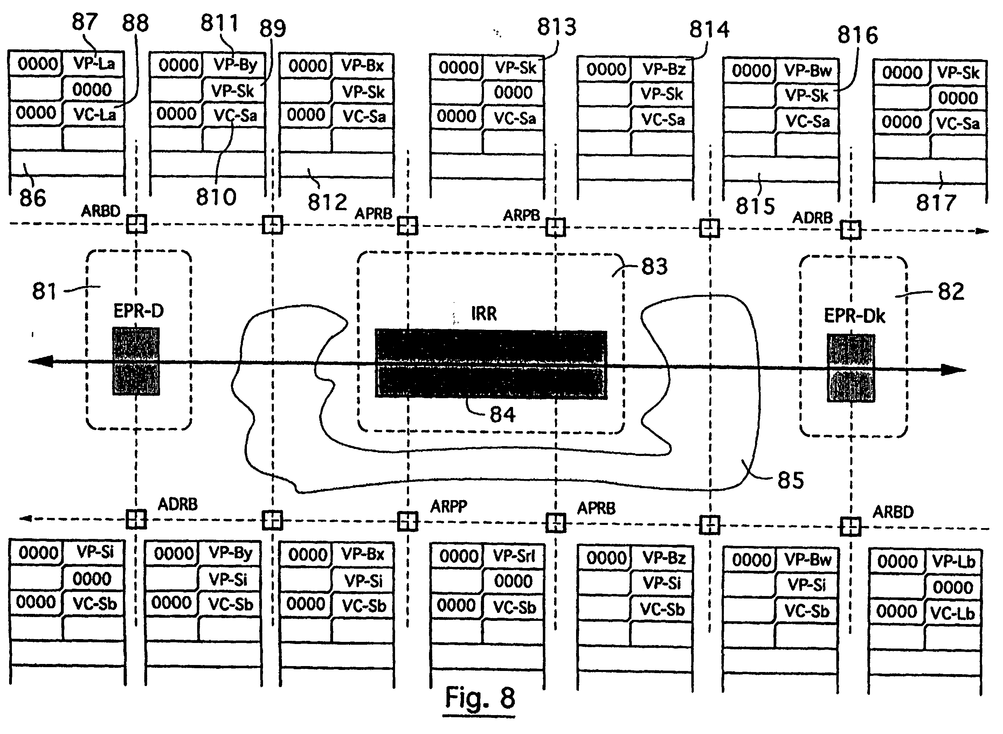

   - la figure 8 présente le cas d'une connexion entre deux terminaux appartenant à des unités délocalisées différentes, via le site principal ;

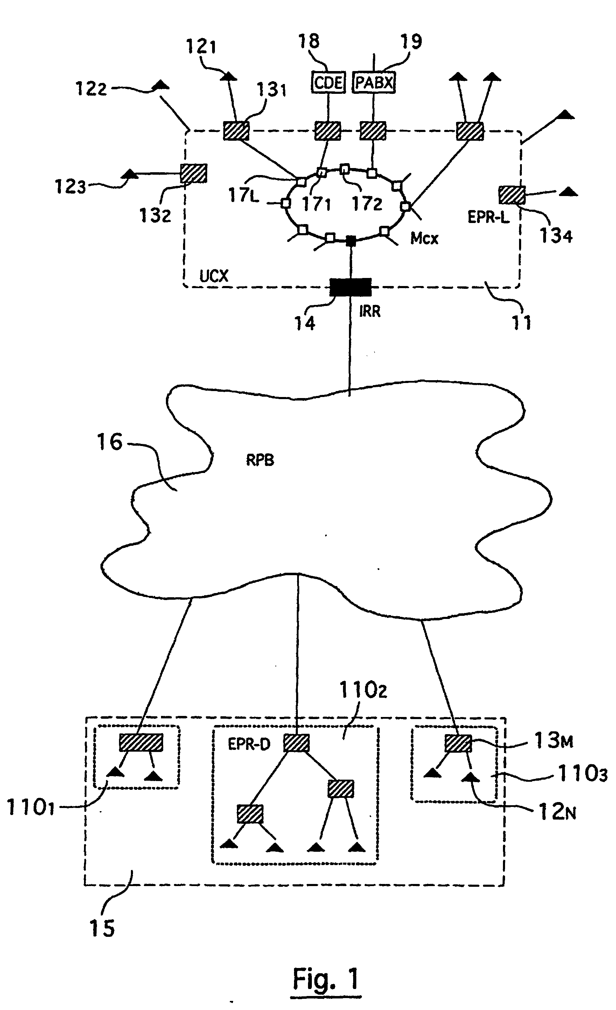

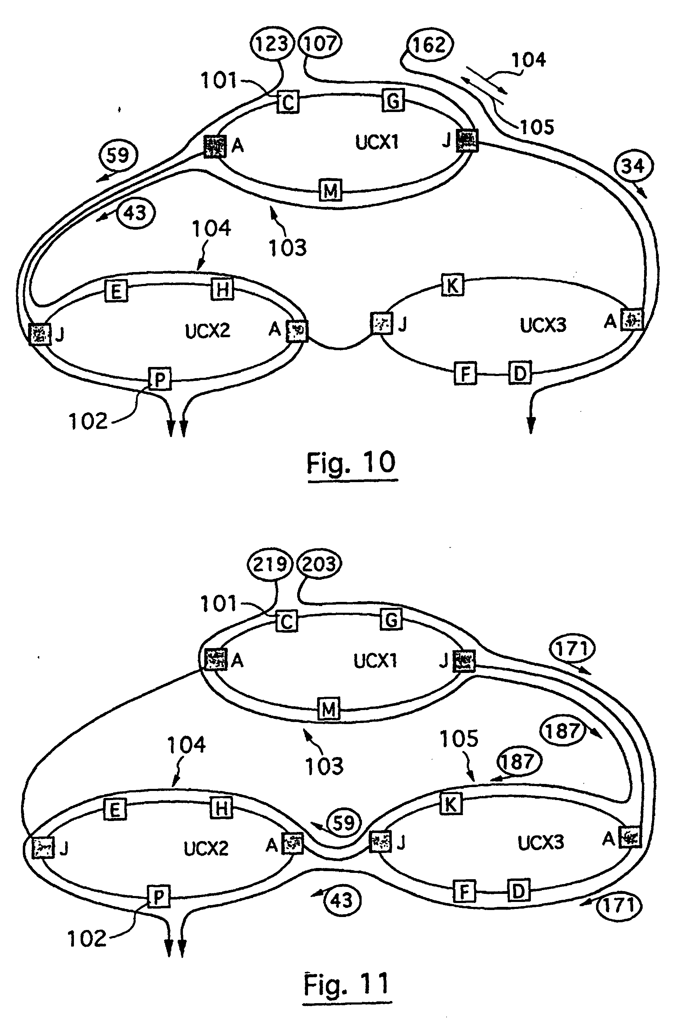

- la figure 10 est un exemple de site privé (principal ou délocalisé) d'un réseau selon la figure 1, composé de trois unités de commutation distinctes ;
- la figure 11 illustre le transit de cellules entre deux unités de commutation du site de la figure 10 ;

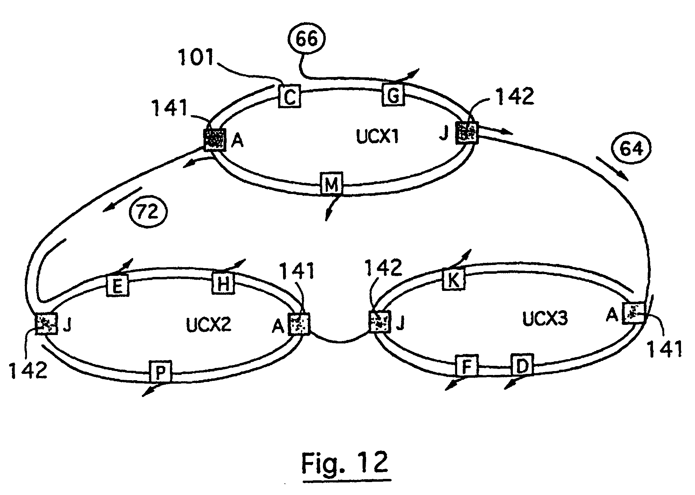

- la figure 12 illustre la diffusion de cellules dans les unités de commutation du site de la figure 10.

L'invention concerne donc les réseaux locaux privés, tels que les sites d'entreprise, les campus, les réseaux métropolitains (MAN : en anglais : "Metropolitan Area Network"), etc... et plus particulièrement les réseaux multisites, dans lesquels plusieurs sites sont reliés entre eux par l'intermédiaire d'un réseau public.

Elle s'applique aux architectures de réseaux fondés sur des échanges de paquets, et notamment sur la technique ATM, décrite notamment dans les numéros spéciaux 144 et 145 de "l'écho des recherches" des 2^{ème} et 3^{ème} trimestres 1991, édités par le Centre National d'Etudes des Télécommunications et l'Ecole Nationale Supérieure des Télécommunications.

Un exemple d'un tel réseau auquel s'applique l'invention est illustré en figure 1. Le réseau considéré est constitué d'un ensemble d'unités de commutation (UCX) 11 pouvant être maillées entre elles (une seule UCX est représentée en figure 1). Les équipements terminaux 12₁ à 12_{N} (stations de travail, terminaux multimédias, ponts, routeurs, équipements d'accès au réseau public, organes de commande et d'administration...) sont connectés sur des équipements périphériques de raccordement (EPR) 13₁ à 13_{M}. Le terme générique "terminal" désigne dans la suite n'importe quel type d'équipement terminal.

Un équipement EPR 13ᵢ est capable de concentrer (ou multiplexer) un nombre quelconque de terminaux 12ⱼ. La limite est liée aux débits des liaisons terminales, à titre d'exemple on peut la fixer à 16 (ceci n'a aucune incidence sur l'objet de la présente invention).

Les UCX et les EPR n'utilisent qu'un seul type d'élément de commutation ATM une matrice 4x4 (MCX) capable de commuter des cellules sur la base de l'analyse d'un champ VPI de 8 bits ou d'un champ VCI de 8 bits. Le choix est déterminé par configuration matérielle ou logicielle à la mise sous tension du module. On verra par la suite que d'autres modules permettent des actions au niveau des champs des en-têtes des cellules sans pour autant effectuer des fonctions de commutation.

Le raccordement de l'installation 11 au réseau public s'effectue à travers un équipement baptisé IRR 14 (Interface de Raccordement au Réseau public).

Un réseau privé multisite est un ensemble dont certains équipements 15 sont délocalisés à travers le réseau public brassé (RPB) 16 sur des distances qui peuvent aller au delà de la taille d'un réseau national. Ces équipements peuvent être
- des terminaux 12_{N} ;
- des concentrateurs de terminaux 13_{M} ;
- des commutateurs.

Dans un tel réseau privé, seul le site principal 11 assure les procédures mentionnées ci-dessus. En d'autres termes le réseau public 16 est complètement transparent aux messages de signalisation entre les équipements périphériques et les organes de commandes situés sur le site principal. Tout se passe comme si le RPB 16 n'existait pas, l'un des objets de la présente invention étant justement de faire en sorte que les cellules soient adaptées avant la traversée du RPB puis restaurées après traversée.

L'architecture visée regroupe donc les entités suivantes :
- un site principal 11 constitué d'une unité de connexion (ensemble de commutateurs ATM 17₁ à 17_{L}) sur laquelle sont connectées des EPR locaux 13₁ à 13₄ et un IRR 14. Les EPR locaux (EPR-L) raccordent des équipements périphériques 12₁ à 12₃: terminaux multimédias, organes de commande 18 (traitement des appels et administration), des passerelles d'accès vers un PABX 19, vers des réseaux locaux existants.
- des unités délocalisées 110₁ à 110₃ constituées d'un ou plusieurs concentrateurs baptisés EPR-D 13_{M}. Un EPR-D est conçu pour raccorder les mêmes équipements périphériques qu'un EPR-L 13₄ exceptés des organes de commande (ce qui lui ôte toute autonomie en terme de gestion des appels).

Les liaisons de transmission entre les différentes entités de l'installation multisite et le RPB sont fondées sur la norme SDH. Les liens sont de types virtuels, appelés en anglais "Virtual Path" (en abrégé VP), et identifiés par des codes VPI portés par les entêtes des cellules ATM.

Les VP sont des liaisons réservées caractérisées par un débit crête que l'utilisateur ne doit pas dépasser. Le site principal voit chaque unité délocalisée à travers un VP : Chaque VP est identifié par un code VPI et un débit crête qui peut être différent d'une unité à l'autre.

Chaque unité délocalisée voit le site principal à travers un seul VP également caractérisé par un débit crête.

Les VP sont alloués et administrés par l'opérateur du réseau public, l'usager privé est taxé sur la base des VP qu'il a loués à l'opérateur.

Un réseau multisite peut à tout moment être modifié par la suppression d'une unité ou au contraire par l'ajout d'unités supplémentaires. Ces opérations se déroulent bien entendu sous le contrôle de l'opérateur public. Ces modifications introduisent également des interventions au niveau de l'administration du réseau privé multisite, elles restent cependant simples à gérer.

Le nombre maximum d'unités délocalisées dépend essentiellement des ressources en débit que l'opérateur peut fournir à l'usager et également des investissements que cet usager est prêt à consentir.

Pour résumer, le réseau multisite de l'invention s'apparente à une architecture de type "maître-esclave", le maître étant représenté par le site principal, et les esclaves par les unités délocalisées. Cette structure présente notamment les avantages suivants :
- elle se prête très bien à des installations privées ayant un centre principal autour duquel gravitent des petites installations géographiquement dispersées : bureaux, filiales, succursales...
- au niveau de la gestion des VP du réseau brassé, on notera une topologie virtuelle du type étoile : il y a autant de liens VP que d'entités délocalisées, ces liens convergeant vers le multiplex d'accès au site principal. Ceci par opposition à un réseau multisite avec sites autonomes pour lequel les différents sites doivent être maillés : solution qui représente une approche plus coûteuse sur l'aspect location de liaisons VP louées ;
- les communications entre unités délocalisées doivent impérativement être commutées au niveau du site principal, cependant les communications entre équipements périphériques connectés sur un même concentrateur (EPR-D) peuvent être effectuées localement, seul le traitement d'appel "remonte" nécessairement jusqu'au site principal ;
- une unité délocalisée ne possède qu'une très faible autonomie de fonctionnement, ce qui lui confère l'avantage d'être moins coûteuse sur les plans investissement initial et dépense de gestion.

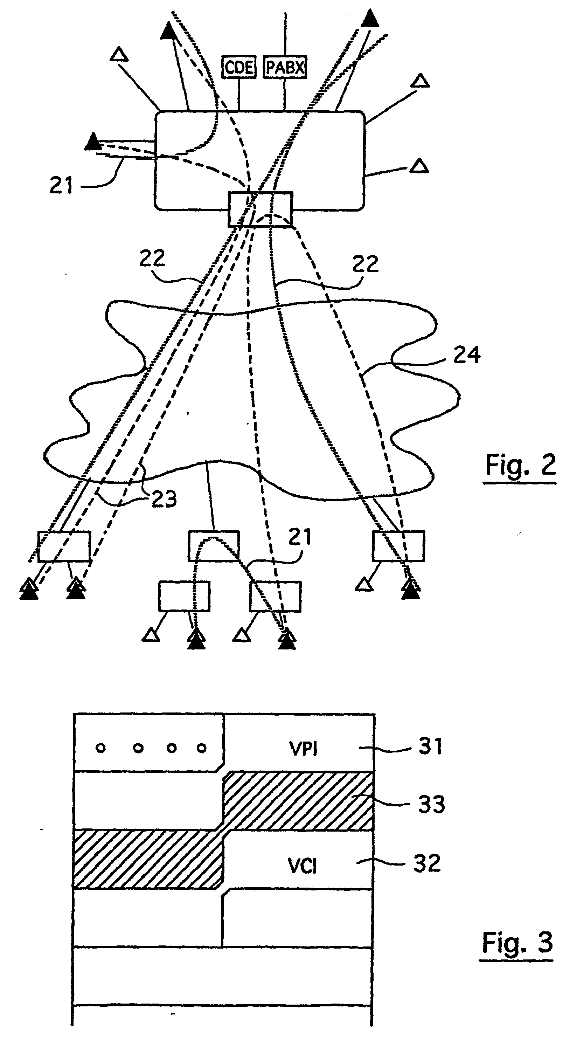

Le procédé de l'invention doit donc permettre de réaliser simultanément notamment les connexions virtuelles illustrées en figure 2 :
- connexion 21 entre deux terminaux connectés sur le site principal 11 (en abrégé SP) ou une unité déportée, sans traversée du réseau public brassé (RBP);
- connexion 22 entre un terminal du SP et un ou plusieurs terminaux connectés sur le SP via le RBP ;
- connexion 23 entre un terminal délocalisé et un ou plusieurs terminaux sur le SP, via le RBP ;
- connexion 24 entre des terminaux délocalisés, avec une double traversée du RBP.

Le procédé de l'invention vise à fournir des réseaux privés multisites tels que définis ci-dessus dans un environnement de réseau public brassé au niveau VP. L'invention concerne notamment la technique à mettre en oeuvre pour pouvoir insérer le réseau public brassé de telle sorte qu'il soit transparent :
- aux protocoles de signalisation interne ;
- aux procédures d'administration ;
- aux connexions établies entre les différents terminaux.

Le principe général consiste à agir par matériel au niveau des champs des entêtes des cellules de telle sorte que ces entêtes soient conformes aux routages :
- dans le réseau public lorsqu'elles quittent soit le site principal, soit une unité délocalisée,
- dans le site principal ou une unité délocalisée lorsqu'elles quittent le RPB.

La norme ATM prévoit que l'entête de chaque cellule comprend notamment, ainsi que cela est illustré par la figure 3 (présentant le début de l'entête d'une cellule) un champ VPI 31 de 12 bits, suivi d'un champ VCI 32 de 16 bits.

Selon l'invention, les champs VPI et VCI sont soumis à des contraintes particulières :
- l'identification des connexions au niveau des équipements terminaux est effectuée par analyse du champ VCI 32, qui doit être limité à 8 bits, l'octet de poids fort étant codé à 0 ;
- les 4 bits de poids fort du champ VPI 31 sont codés à 0.

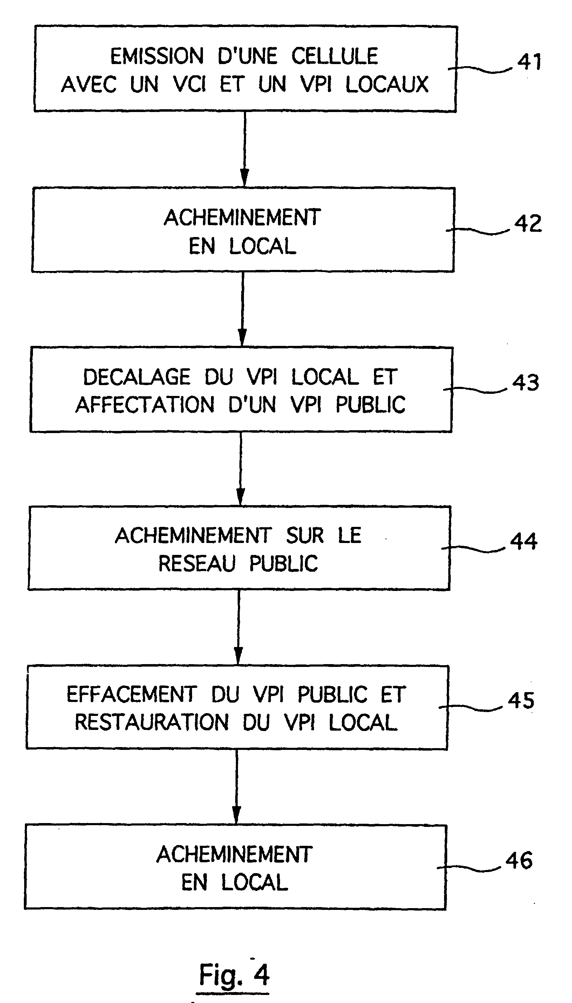

Ces contraintes permettent de ménager une zone de décalage 33 utilisée pour mettre en oeuvre le procédé de l'invention, tel qu'il est illustré dans ces grandes lignes en figure 4.

Le procédé comprend donc les étapes suivantes :
- émission 41 d'une cellule avec un VCI et un VPI locaux (ou privés), c'est-à-dire exploitable sur le réseau privé ;
- acheminement 42 de la cellule sur la portion de réseau privé de l'émetteur jusqu'à un noeud de connexion avec le réseau public brassé ;
- dans ce noeud de connexion, décalage du VPI privé dans la zone 33 réservée à cet effet, et inscription d'un VPI public (43) ;
- acheminement 44 (brassage) sur le réseau public, à l'aide du VPI public ;
- à réception dans un noeud de connexion de la portion du réseau privé portant le destinataire, effacement du VPI public et restauration, par décalage, du VPI privé stocké dans la zone 33 (45) ;
- acheminement 46 vers le destinataire.

Selon le mode de réalisation préférentiel de l'invention décrit plus en détail par la suite, l'acheminement et le routage des cellules met en oeuvre les 2 niveaux VP et VC :
- dans les UCX, le routage est effectué par analyse des contenus des champs VPI des cellules, selon une technique que l'on peut rapprocher du mode autoroutage, dans la mesure où le code contenu dans le champ VPI identifie une adresse physique de destinataire ;
- dans les EPR, la commutation s'effectue classiquement par analyse du champ VCI, avec cependant une différence par rapport aux commutateurs de VC du réseau public dans la mesure où il n'est pas tenu compte des contenus de champs VPI, ce qui implique ici qu'en entrée dans une EPR tous les codes VCI soient différents sur chaque multiplex.

Cette technique présente notamment les avantages suivants :
- le marquage des connexions établies appel par appel n'est effectué qu'aux extrémités (dans les EPR), ce qui offre, par rapport aux procédures nécessitant le marquage dans l'ensemble des matrices de commutation qui existent sur la liaison entre les terminaux à connecter virtuellement, des avantages en termes de rapidité et de simplicité de protocole, et une meilleure sécurisation ;
- les connexions étant identifiées par VCI choisi par les EPR destinataires, le nombre de connexions pouvant être établies simultanément est très important.

On décrit tout d'abord le routage des cellules dans le site principal, en relation avec la figure 5.

On considère une cellule 51 partant d'un EPR émission 52 (EPR-e) à destination d'un EPR réception 53 (EPR - r) via le réseau d'interconnexion 64.

Côté source la cellule 51 porte un VPI local 55 (VP-La) alloué par l'EPR-e 52 à l'établissement de la connexion. Elle porte un VCI local (VC-La) également alloué par l'EPR-e.

Dans le premier étage de commutation 57 il y a aiguillage vers un mutliplex commun avec traduction en un VCI 18 qui a été alloué par l'EPR-r 53 destinataire. Ce VC-Sa ne changera plus jusqu'à l'arrivée vers le destinataire : les conflits sont ainsi résolus dans la mesure où c'est toujours l'extrémité réceptrice qui affecte les codes VCI à chaque connexion.

On rappelle que VP-La, VC-La et VC-Sa ne sont alloués que pour la durée d'une communication.

Dans un second étage 59 de l'EPR-e 52, il y a traduction du code VPI en un code VP-Sa 510 qui est spécifique à la direction visée, c'est-à-dire de l'EPR-r. Ce code est permanent et il est le même pour n'importe quelle source appelant le même destinataire.

L'aiguillage dans le réseau d'interconnexion 54 s'effectue par analyse du contenue du champ VPI 510. On rappelle que tous les chemins virtuels sont établis de façon permanente à l'intérieur de ce réseau : une direction visée est identifiée par un code VPI (un second code identifiant un second chemin est prévu pour des raisons de sécurité ou de répartition de trafic). Ce type de routage est proche de la technique par auto-acheminement.

Toutes les cellules provenant de différentes sources et destinées au même EPR-r 53 sont multiplexées sur le multiplex d'accès à l'EPR-r. Elles portent toutes le même code VPI VP-S'a 512, et seul le champ VCI 513 permet d'identifier leur appartenance à une connexion.

C'est l'analyse de ce code 513 dans des modules 514 de commutation de l'EPR-r qui va permettre leur aiguillage vers le multiplex de sortie destinataire. C'est enfin le terminal qui, également par analyse du champ VCI, effectuera le démultiplexage des connexions qui peuvent lui être simultanément adressées.

Le processus est bien entendu absolument identique pour l'autre sens des connexions, l'EPR-e jouant maintenant le rôle d'EPR-r, l'EPR-r jouant le rôle d'EPR-e. On notera toutefois qu'il n'y a pas de symétrie au niveau des affectations des codes VCI et VPI aux extrémités, c'est-à-dire que pour une communication bidirectionnelle qui met en oeuvre 2 connexions virtuelles (une par sens), pour une extrémité donnée les codes VPI et les codes VCI en départ et en arrivée peuvent être différents.

L'invention présente notamment un intérêt lorsqu'une unité délocalisée doit être connectée au site principal, ou à une autre unité délocalisée. On décrit ci-dessous les manipulations effectuées au niveau des champs des en-têtes de cellules afin de les préparer au transit dans le réseau public brassé. Ces opérations sont totalement effectuées par matériel dans des modules spécifiques abrités dans les équipements d'interface : l'IRR en ce qui concerne l'interface entre le site principal et le RPB et l'EPR-D en ce qui concerne les unités délocalisées.

La figure 6 concerne le cas de deux connexions établies simultanément en direction de la même unité 61. Elle présente les contenus des différents champs de l'entête pour chaque point de référence de la liaison entre le terminal émetteur et le terminal récepteur.

La nouveauté se situe essentiellement au niveau de la traversée de L'IRR 65. Les fonctions effectuées sont les suivantes :
- le code VPI privé (noté VP-Sa) 66 est traduit en VPI réservé pour le réseau public brassé (noté VP-Bx) 67,
- simultanément le code privé VP-Sa 66 est transféré à la place 68 de l'octet poids fort du champ VCI.

Cette opération est réalisée dans le module principal matériel de l'IRR 65 baptisé ARBP (Accès au Réseau Brassé à partir du site Principal).

On notera que cette opération n'est possible que parce que, par hypothèse, l'installation privée multisite n'exploite que les 8 bits de poids faibles du code VCI.

Le réseau RPB 69 effectue le routage sur la base des VPI, les codes VPI étant généralement traduits : on suppose que la cellule arrive dans l'unité délocalisée avec le VPI noté (VP-By) 610.

La traversée d'un module 611 dans l'EPR-D 61 effectue maintenant la fonction de restauration du code VPI privé 612 en opérant un décalage du contenu de l'octet de poids fort du champ VCI vers le champ VPI. Ce module matériel 611 est baptisé ADRP (Accès à une unité Déportée en venant du Réseau Brassé).

On notera que les cellules qui ont des origines différentes (EPR-Lx 62 et EPR-Ly 63) portent au niveau du RPB les mêmes codes VPI (VP-Bx) 67 et (VP-By) 610 car elles sont canalisées dans le même VP du réseau public brassé 69.

En revanche, bien sûr, les VC-La 613 et 614 de chaque EPR-L 62 et 63 sont traduits de façons différentes (VC-Sa 615 et VC-Sb 616) pour identifier chaque connexion.

La figure 7 décrit le cheminement de cellules en provenance de 2 EPR-D distinctes (EPR-Dx 71 et EPR-Dy 72) vers un EPR-L 73 du site principal 74. Par rapport au cas ci-dessus on noie qu'il n'existe pas d'IRR dans les EPR-D 71, 72 et que ceux-ci doivent effectuer les fonctions d'adaptation au réseau public 75.

En l'occurrence il s'agit :
- de traduire un code VPI local 76, 77 (noté VP-Lr) en un code VPI du RPB (noté VP-By 78 ou VP-Bw 79 selon l'EPR considérée),
- simultanément d'introduire dans l'octet de poids fort du champ VPI le code VPI (noté VP-Srd) qui sera exploité dans le site principal pour acheminer la cellule vers l'EPR-L visé.

Cette opération est réalisée dans un module matériel 710, 711 assez semblable au module ARBP, baptisé ARBD (Accès au Réseau Brassé à partir d'une unité Délocalisée).

La traversée d'un module 712 dans l'IRR du site principal 74 a pour effet de restaurer les contenus de l'en-tête des cellules afin qu'elles soient aiguillées dans le site principal en direction de l'EPR-L visée.

Il s'agit:
- d'éliminer le code VPI de routage dans le RPB (ici VP-Bx 713 ou VP-Bz 714) et de le remplacer par le code VPI privé 715 (ici VP-Srd). Ce dernier code peut lui-même être de nouveau traduit (716) à l'intérieur du site principal ;
- d'écrire l'octet de poids fort 717 du champ VCI avec la valeur 0.

On décrit maintenant une connexion entre 2 unités délocalisées, en relation avec la figure 8.

Ce type de connexion représente un élément important de l'invention. La connexion entre deux unités délocalisées 81 et 82 passe nécessairement par le site principal 83 et traverse deux fois le RPB 85. Plus précisément, la commutation s'effectue dans l'IRR afin de ne pas encombrer inutilement les ressources du site principal 83.

L'autre alternative qui consisterait à établir des conduits permanents de type VP dans le RPB entre chaque couple d'unités délocalisées a été volontairement rejetée dans la mesure où elle coûte un nombre très important de VP réservés (le maillage complet de N unités prises 2 à 2 consomme en effet N(N-1)/2 VP).

La figure 8 décrit donc les cheminements des cellules entre 2 unités délocalisées (EPR-Di 81 et EPR-Dk 82).

On constate ici que les en-têtes des cellules subissent une double manipulation, au niveau du site principal : une première fois en arrivant dans l'IRR, une seconde fois en le quittant.

Tout se passe comme si les 2 demi-moitiés des connexions décrites précédemment étaient mises bout à bout.

Ainsi, les entêtes subissent les transformations suivantes, dans le sens EPR-Dj 81 vers EPR-Dk 82 (le processus dans l'autre sens est symétrique, et n'est donc pas décrit en détail) :
- la cellule 86 est émise par un terminal émetteur vers l'EPR-Dj, avec un VP-La 87 et un VC-La 88 locaux.;
- le VP-La 87 est traduit en un VPI privé VP-Sk 89 puis décalé dans l'octet de poids fort du VCI, par le module ARBD de l'EPR-Dj 81 ;
- le VC-La 88 est traduit en un VCI privé VC-Sa 810 par le module ARBD de l'EPR-Dj 81;
- le VPI-La 87 est traduit en un VPI public VP-By 811 ;
- la cellule 812 est transmise sur le RPB 85 à l'IRR du site principal 83 ;
- l'APRB de l'IRR réalise le décalage du VPI privé VP-Sk 813 dans le champ VPI ;
- le VPI privé VP-Sk 813 est décalé dans l'octet de poids fort du VCI, par le module ARPB de l'IRR 84 ;
- le VPI-Sk 813 est traduit en un VPI public VP-Bz 814 ;
- la cellule 815 est transmise sur le RPB 85 à l'EPR-Dk 82 ;
- l'ADRB de l'EPR-Dk réalise le décalage du VPI privé VP-Sk 816 dans le champ VPI;
- la cellule 817 est acheminée au terminal destinataire.

L'invention propose également un mode particulièrement avantageux d'acheminement des cellules dans un site principal ou une unité délocalisée, exploitant le VCI et le VPI privé libéré par le procédé décrit précédemment.

Cette technique est basée sur un mécanisme mettant en oeuvre:
1. par autoroutage en exploitant le contenu du champ VPI dans le coeur du système (le réseau d'interconnexion) ;
2. par VCI en exploitant uniquement les 8 bits de poids faibles (du champ de 16 bits) dans les équipements périphériques de raccordement de multiplexage et démultiplexage.

Ainsi, une cellule émise d'un terminal émetteur vers un terminal destinataire sera routée successivement:
- par VCI (classiquement) dans l'équipement de raccordement côté émetteur,
- par autoroutage (utilisation du champ VPI) dans le coeur d'interconnexion,
- de nouveau par VCI, dans l'équipement de raccordement côté récepteur.

Les entités de commutation (matrices) utilisées sont identiques dans les 2 niveaux. La mémoire de traduction est la même : dans le cas de l'autoroutage, elle est adressée par le contenu du champ VPI de l'entête, et dans le cas du routage par VCI elle est adressée par le contenu du champ VCI. Le choix du mode de fonctionnement d'une matrice peut être effectué de 2 façons:
- implicitement par programmation dans la matrice à l'initialisation,
- explicitement par positionnement d'un bit dans l'entête de chaque cellule et analyse de ce bit dans la matrice.

Les 2 champs VCI et VPI ayant la même longueur de 8 bits, la mémoire de traduction d'une capacité de 1024 mots est intégrable très facilement.

Avec cette technique, l'établissement d'une connexion virtuelle nécessite pour un sens donné la gestion de 2 identificateurs :
- l'adresse d'autoroutage (contenue dans le champ VPI) calculée dans l'organe de commande à partir des identificateurs physiques des terminaux entre lesquels la communication doit être établie ; l'algorithme de calcul très simple sera décrit dans la suite ;
- le code VCI alloué par l'extrémité destinataire et choisi parmi les codes non utilisés des 256 disponibles.

Le processus d'établissement du chemin virtuel s'opère ensuite dans chaque extrémité sur lesquels sont connectés les terminaux demandeurs et demandés.

Ces marquages s'effectuent sous la forme d'échanges processeurs en nombre très limité dans la mesure où ils restent localisés à la périphérie : le nombre de matrices de commutation concernées est donc très limité. En particulier, aucune intervention n'est nécessaire au niveau des matrices de la chaîne d'interconnexion.

La communication est établie lorsque l'ensemble des connexions virtuelles qui la compose sont établies : une seule connexion s'il s'agit d'une communication unidirectionnelle, 2 connexions s'il s'agit d'une communication bidirectionnelle simple, plusieurs connexions s'il s'agit de communications plus complexes qui en outre peuvent être symétriques ou non.

Le principe d'autoroutage décrit par utilisation du champ VPI impose une phase d'initialisation du réseau, et plus exactement de la partie interconnexion, c'est-à-dire de la partie du réseau dans laquelle les cellules sont autoroutées. Cette opération est effectuée avant la mise en service effective de l'installation, dès sa mise sous tension.

Elle est réalisée sous le contrôle d'un processeur et consiste à mettre à jour les mémoires de traduction de toutes les matrices de commutation : les informations à charger sont issues d'une table de configuration dont les contenus, au cours de la vie du système, peuvent évoluer en fonction des modifications physiques que le réseau doit subir : extension, suppression, reconfiguration... Tout changement de contenu d'une table entraîne une réinitialisation de tout ou partie du réseau se traduisant par la mise à jour des contenus des mémoires de traduction de toutes les matrices de commutation concernées. Dans la suite, la description des principes appliqués à un modèle d'architecture de réseau donnera un aperçu de la nature des informations à charger.

En fonction de l'importance du réseau, le nombre de processeurs sera plus ou moins grand. Généralement, on admet que chaque zone géographique d'un site donné est desservie par un commutateur et que ce commutateur est sous le contrôle d'un processeur de commande.

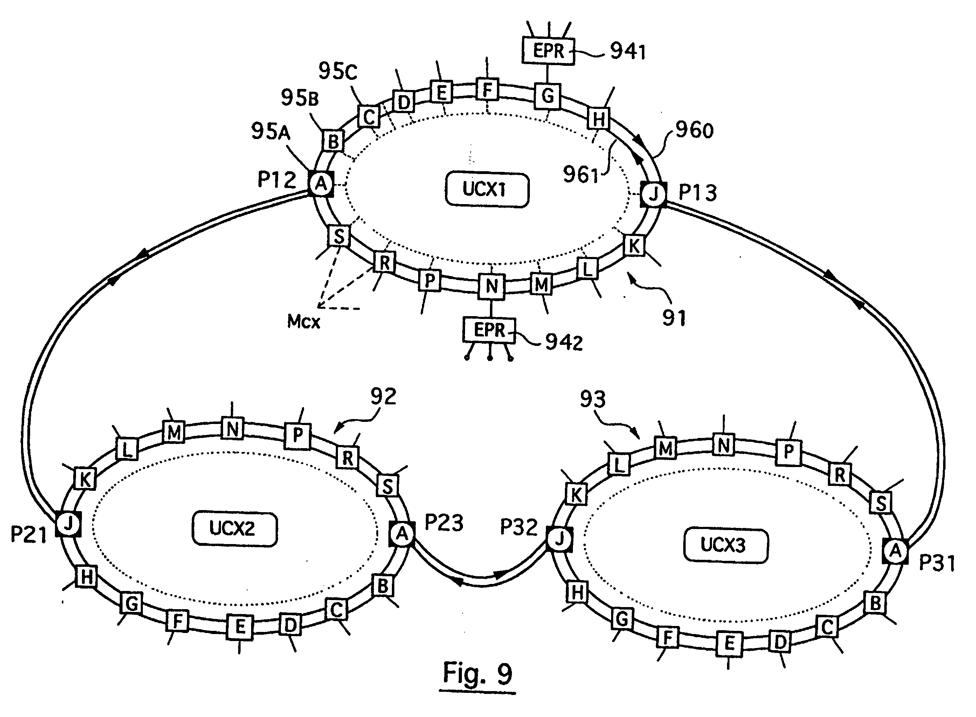

Afin d'illustrer les principes mis en oeuvre, on considère un modèle d'architecture de réseau de taille moyenne sur lequel est appliqué le mécanisme de l'invention illustré par la figure 9. Ce réseau est physiquement constitué de 3 unités de commutation (baptisées UCX1 91, UCX2 92 et UCX3 93) maillées 2 à 2. Chaque UCX sur laquelle sont connectés des équipements de raccordement de terminaux (EPR) 94i couve une zone locale du site. L'intérêt de l'autoroutage apparaît particulièrement sur des architectures de réseau constituées de longues chaînes d'éléments de commutation, et notamment des topologies réparties. C'est pour cette raison que les UCX 91, 92, 93 sont des structures en boucle à double anneau contrarotatif 96₀, 96₁ comprenant 16 noeuds ATM 95i.

La figure 9 représente donc le modèle et les conventions de représentation des différents éléments constitutifs:
- pour chaque UCX, les 16 matrices élémentaires 95i de commutation ATM (MCX) sont repérées de (A) à (S) parmi lesquelles (A) et (J) désignent les passerelles ;
- les MCX passerelles sont également appelées Pxy ou x désigne le numéro de son UCX d'appartenance et y le numéro de son UCX de rattachement.

Les équipements périphériques de raccordement 94i sont baptisées EPR.

On notera que les MCX sont des matrices ATM 4X4 interconnectées en boucle et que les mutliplex de rang 4 ne sont pas utilisés.

Les nombres de chemins possibles entre couples d'EPR sont :
- de 2, entre EPR d'une même UCX,
- de 4, entre EPR d'UCX différentes en accès direct.
- de 8, entre EPR d'UCX différentes lorsqu'il y a transit dans la 3ème UCX.

En exploitant toutes les possibilités, le nombre de chemins entre 2 EPR appartenant à des UCX différentes peut aller jusqu'à 12. On rappelle que la multiplicité de chemins est une caractéristique très intéressante qui permet à un réseau de supporter certains types de pannes tout en étant facilement exploitable par la technique de l'autoroutage.

L'étiquette d'autoroutage utilisant le champ VPI d'une longueur de 8 bits, un nombre de codes VPI limité à 256 conduit à ne pouvoir exploiter qu'un maximum de 2 chemins quelles que soient les localisations respectives des EPR :
- en local dans une UCX : soit par l'anneau 0, soit par l'anneau 1,
- en direct entre 2 UCX : soit par les 2 anneaux 0, soit par les 2 anneaux 1,
- en transit dans un UCX : soit par les 3 anneaux 0, soit par les 3 anneaux 1.

On définit les abréviations suivantes :
- le terminal demandeur est baptisé Dr, le terminal demandé est baptisé Dé ; Dr et Dé sont généralement des identificateurs physiques.
- AcDr désigne le point d'accès du réseau sur lequel est connecté l'EPR de l'extrémité demandeur.
- AcDé désigne le point d'accès sur lequel est connecté l'EPR de l'extrémité demandé.
- [X] : désigne l'adresse d'auto-routage contenue dans le champ VPI pour router les cellules du terminal demandeur vers le terminal demandé.
- [Y] : désigne l'adresse d'auto-routage pour aller du terminal demandé vers le terminal demandeur.
- i_a0 désigne le numéro d'un noeud vu par l'anneau 0.
- i_a1 désigne le numéro d'un noeud vu par l'anneau 1.

En d'autres termes :
- [X] identifie le chemin virtuel entre le point d'accès AcDr et le point d'accès AcDé.
- [Y] identifie le chemin virtuel entre le point d'accès AcDé et le point d'accès AcDr.

Les codes VCI nécessaires à la commutation périphérique et à l'identification des connexions entre les terminaux sont repérés de la façon suivante :

### Dans le sens demandeur vers demandé :

- (p) : code VCI alloué par l'EPR demandé pour identifier la connexion virtuelle côté EPR demandé ;
- (m) : code VCI alloué par l'EPR demandeur pour identifier la même connexion virtuelle côté demandeur. (m) est traduit en (p) dans l'extrémité EPR demandeur.

### Dans le sens demandé vers demandeur :

- (q) : code VCI alloué par l'EPR demandeur pour identifier la connexion virtuelle côté EPR demandeur ;
- (n) : code VCI alloué par l'EPR demandé pour identifier la même connexion virtuelle côté demandé. (n) est traduit en (q) dans l'extrémité EPR demandé.

L'établissement d'une communication comprend notamment les étapes suivantes :

### - Gestion des connexions à la périphérie

### Pendant la phase d'établissement de la connexion dans le sens demandeur vers demandé :

a) le VCI (m) est inscrit dans les mémoires de traduction des matrices de l'EPR demandeur ;
b) le VCI (p) est inscrit dans les mémoires de traduction des matrices de l'EPR demandé.

Lors de la phase de libération de la connexion, (m) et (p) sont effacés des mémoires de traduction.

### Pendant la phase d'établissement de la connexion dans le sens demandé vers demandeur :

a) le VCI (n) est inscrit dans les mémoires de traduction des matrices de l'EPR demandé
b) le VCI (q) est inscrit dans les mémoires de traduction des matrices de l'EPR demandeur

Lors de la phase de libération de la connexion, (n) et (q) sont effacés des mémoires de traduction.

Le paragraphe précédent fait état de 2 VCI par sens : (m) puis (p) dans le sens aller (demandeur vers demandé), (n) puis (q) dans le sens retour (demandé vers demandeur).

En effet, au départ d'un EPR donné, plusieurs connexions peuvent être établies simultanément : ces connexions peuvent porter les mêmes VCI dans la mesure où ceux-ci sont alloués de façon non concertée par les EPR destinataires. Or pour pouvoir libérer les connexions indépendamment les unes des autres il faut les identifier dans l'EPR de départ individuellement : c'est le rôle du VCI de départ alloué à l'établissement par l'EPR émetteur.

### - Gestion des connexions par la commande

Elle concerne la recherche des chemins et se concrétise par le calcul des codes d'autoroutage.

Les codes sont calculés à partir des identités physiques des accès sur lesquels sont connectés les EPR demandeur et demandé, compte-tenu de l'image du réseau que possède la commande.

Les identités physiques des accès AcDr et AcDé sont communiquées à l'aide des messages de signalisation que s'échangent les terminaux et l'organe de commande au cours de la phase d'établissement de la communication. Cette commande possède l'image physique du réseau et le mémoire à tout instant de toutes les connexions établies et de leurs paramètres : nombre, chemins suivis, chemins de secours possibles, charges de toutes les liaisons multiplex. Parmi les différents chemins possibles entre l'AcDr et l'AcDé, elle élabore un choix en fonction de critères du type : charge, éloignement, temps de traversée...ce qui conduit à proposer des codes d'autoroutage à chacune des extrémités appelante et appelée. Chacune de ces extrémités reçoit au moins un code, mais elle peut en recevoir plusieurs parmi lesquels certains désignent des routes de secours que chaque terminal peut être amené à exploiter en cas d'anomalie de fonctionnement : rupture d'une liaison, ou surcharge de trafic accidentelle par exemple.

Dans la suite de la description, lorsqu'il est fait état de codes sous la forme de nombres décimaux, on se reportera aux tableaux descriptifs de l'annexe 1.

Les principes qui suivent supposent que la phase préalable d'initialisation a été effectuée, c'est-à-dire la mise à jour des mémoires de traduction de tous les MCX des 3 UCX, les données à charger étant conformes aux contenus des tableaux de l'annexe 1.

### Adressage local dans une UCX

Une EPR s'adresse à une autre EPR en utilisant l'un des 2 codes VPI affectés à l'EPR visée selon que le chemin choisi emprunte l'anneau 0 ou l'anneau 1, le critère de choix étant le chemin le plus court (mesuré en nombre de noeuds traversés) ou celui qui est le moins chargé. Les noeuds passerelles ne sont pas adressables directement, en conséquence pour un UCX d'une capacité de 16 noeuds dont 14 EPR, le nombre de codes nécessaires est de 28. Ces 28 codes sont les mêmes à l'intérieur de chaque UCX (voir annexe 1).

Lorsque plusieurs EPR doivent s'adresser simultanément à une même EPR cible (en d'autres termes lorsque des connexions doivent être établies entre des terminaux issus de différentes origines et des terminaux connectés sur un même EPR), ils utilisent le même code VPI. Le risque de confusion n'existe pas dans la mesure où les connexions seront identifiées dans les extrémités terminales par des VCI qui seront nécessairement différents.

### Adressage direct entre 2 UCX

Il s'agit ici d'établir un lien entre 2 EPR n'appartenant pas à la même UCX. Le code de VPI utilisé par l'EPR source est un code qui permet le routage vers le noeud passerelle de l'UCX source reliée au noeud passerelle de l'UCX puits. Ce code est traduit en un VPI local qui est celui spécifique de l'EPR visée. On constate donc qu'une EPR doit disposer de 28 codes VPI d'adressage des EPR appartenant à un autre UCX : 14 codes par un chemin utilisant l'anneau 0 du UCX source et ensuite l'anneau 1 du UCX puits. On pourrait également envisager des combinaisons anneau 0 puis anneau 1, et anneau 1 suivi de anneau 0 : ceci conduirait à consommer autant de codes VPI supplémentaires.

La figure 10 représente les deux connexions possibles entre le noeud (C)10 de l'UCX 103 et le noeud (P) 102 de l'UCX2 104, l'une par les anneaux 0 104 et l'autre par les anneaux 1 105.

Les cellules portant le VPI 107 seront émises sur l'anneau 0 de l'UCX1. Le noeud passerelle (A) est programmé pour les sortir et traduire le code 107 en code 43. Le noeud (J) de l'UCX2 émet ces cellules vers l'anneau 0, le code 43 désigne le destinataire, en l'occurrence le noeud (P). La même technique est utilisée pour atteindre (P) par les anneaux 1 : le code source est 123, le code traduit étant 59. On rappelle que ces codes sont extraits du tableau de l'annexe 1 et on remarquera qu'un code d'adressage entre 2 UCX se déduit facilement du code d'adressage à l'intérieur d'une UCX.

Plus généralement, si on considère une UCX quelconque qu'on baptisera UCXn, pour, partant de cette UCX :
1) viser un noeud de l'UCXn+1, il suffit d'ajouter la valeur 64 à l'identificateur local de ce noeud (dans l'exemple ci-dessus, 43 + 64 = 107 et 59 + 64 = 123),
2) viser un noeud de l'UCX n+2, il suffit d'ajouter la valeur 128.

### Adressage avec transit entre 2 UCX

L'architecture du modèle permet de faire un routage entre 2 UCX en passant par la 3ème. Ceci est possible en affectant autant de VPI supplémentaires, en l'occurrence 28 codes par UCX à atteindre après transit dans une UCX intermédiaire. La technique fait appel à une double traduction, la première dans le noeud passerelle de l'UCX source, la seconde dans le noeud passerelle sortant de l'UCX de transit.

La figure 11 décrit le processus pour atteindre le noeud (P) 102 de l'UCX2 104 en partant du noeud (C) 109 de l'UCX1 103 et en transitant à travers l'UCX3 105.

Le code 203 aiguille les cellules sur l'anneau 0 de l'UCX1 jusqu'au noeud (J) qui la dirige vers l'UCX3 après traduction en 171. Vu de l'UCX3 ce code permet de viser le noeud 43 de l'UCX voisin, ici le noeud (P). C'est le noeud (J) qui effectue la seconde traduction de 171 en 43.

Le code 219 permet également d'atteindre le noeud (P) en utilisant les anneaux 1. on remarquera qu'il est simple de retrouver le code permettant le transit. On ajoute 128 à 43 puis 32 à 171 ; de la même façon, 59 + 128 = 187, 187 + 32 = 219.

En règle générale :
- S'il s'agit de suivre le chemin UCXn, UCXn+1, UCXn+2 (c.à.d UCX1, UCX2, UCX3 ou UCX2, UCX3, UCX1 ou UCX3, UCX1, UCX2), il suffit d'ajouter 96 à l'adresse du noeud visé.
- S'il s'agit de suivre le chemin UCXn, UCXn+2, UCXn+1 (c.à.d UCX1, UCX3, UCX2 ou UCX2, UCX1, UCX3 ou UCX3, UCX2, UCX1), il suffit d'ajouter 160 à l'adresse du noeud visé ; cas illustré ci-dessus.

Par exemple, si en partant de l'UCX1 on souhaite atteindre le noeud (P) de l'UCX2 en transitant par l'UCX3 :
a) par les anneaux 0, les adresses seront successivement : 203, 171 et 43.
b) par les anneaux 1, les adresses seront successivement : 219, 187 et 59.

L'ensemble des règles de routage est résumé ci-dessous :

Pour aller de UCXn à UCXn+1
- Par les anneaux 0 : i-a0 + 64
- Par les anneaux 1 : i-a1 + 64

Pour aller de UCX, à UCXn+2
- Par les anneaux 0: 1-a0 + 128
- par les anneaux 1 i-a1 + 128

Transit : faire UCXn, UCXn+1, UCXn+2
- Par les anneaux 0 : i-a0 + 96
- Par les anneaux 1 i-a1 1 + 96

Transit : faire UCXn, UCXn+2, UCXn+1
- Par les anneaux 0 : i-a0 + 160
- Par les anneaux 1 : i-a1 1 + 160

L'établissement de connexions point à multipoint est une exigence des réseaux locaux privés. Le dispositif décrit est capable de répondre à ce problème, bien que le concept d'autoroutage puisse paraître incompatible avec la notion de diffusion.

Deux approches sont envisageables.
1) la première consiste à gérer les connexions multipoint sans utiliser la technique décrite, mais en se fondant uniquement sur la technique classique de marquage par VPI. L'arbre de diffusion est bâti en marquant toutes les mémoires de traduction des MCX concernées, cette procédure sans originalité présente l'inconvénient de nécessiter un nombre relativement important d'échanges. Les MCX du coeur sont marqués en VPI, ceux des équipements périphériques (EPR) sont marqués en VCI;
2) La seconde consiste à effectuer la diffusion dans le coeur, et à gérer l'arbre branche par branche dans les EPR. Pour rester compatible avec le dispositif décrit, on propose d'affecter à chaque noeud 2 codes VPI réservés à la diffusion, un code par anneau. Toute cellule en provenance d'un EPR et portant l'un des codes de diffusion serait diffusée dans la boucle, sur l'anneau correspondant : après un tour complet, elle serait éliminée par le noeud dans lequel elle serait entrée dans la boucle.

On remarquera que l'inondation n'est pas totale, dans la mesure où l'arbre n'utilise qu'un anneau par UCX.

Tout arbre de diffusion couvrirait les 3 UCX, l'établissement des branches étant effectué au niveau des EPR puits en mode VCI.

La figure 12 illustre la technique de diffusion à partir du noeud (C) 101 dont le code VPI affecté à cette fonction est ici 66 (pour une diffusion par les anneaux 0).

Les cellules portant le code 66 sont émises sur l'anneau 0 de l'UCX1 et sont diffusées vers chaque sortie des noeuds, y compris les noeuds passerelles. Ces cellules sont éliminées par le noeud d'entrée 101 (C), ce MCX ayant sa mémoire de traduction programmée pour effectuer cette opération.

Les noeuds passerelles 141 (A) et (J) 142 traduisent le code 66, respectivement en code 72 et en code 64. Les cellules 72 entrent dans l'UCX2 par le noeud (J), les cellules 64 entrent dans l'UCX3 pr le noeud (A). Ces codes sont des codes de diffusion pour les noeuds A et J. Le processus décrit ci-dessus se répète donc dans les UCX2 et UCX3, les 2 noeuds d'entrée éliminant les cellules dès qu'elles ont effectué un tour complet. Il existe toutefois une différence en ce qui concerne les noeuds passerelles (A) pour l'UCX2 et (J) pour l'UCX3. En effet, ceux-ci sont programmés de telle sorte que les cellules ne soient pas diffusées en sortie, la règle étant qu'un noeud passerelle recevant un code de diffusion affecté à un second noeud passerelle, ne le diffuse pas par la sortie. Ici, (A) de l'UCX1 peut diffuser 66 parce qu'il est affecté à un noeud d'EPR, en revanche (A) ne peut diffuser 66 parce que ce code est affecté au noeud passerelle (J). Cette technique évite que les cellules ne circulent infiniment sur le réseau.

En résumé :
- recevant l'un des codes (65, 66, 67, 68, 69, 70, 71, 73, 74, 75, 76, 77, 78, 79) par l'anneau 0, un noeud (A) le diffuse et le traduit en 72 ; un noeud (J) le diffuse et le traduit en 64.
- recevant l'un des codes (81, 82, 83, 84, 85, 86, 87, 88, 89, 90, 91, 92, 93, 94, 95) par l'anneau 1, un noeud (A) le diffuse et le traduit en 88 ; un noeud (J) le diffuse et le traduit en 80.
- Un noeud (A) recevant 64 par l'anneau 0 ou 80 par l'anneau 1 élimine la cellule.
- Un noeud (J) recevant 72 par l'anneau 0 ou 88 par l'anneau 1 élimine la cellule.
- Un noeud (A) recevant 72 par l'anneau 0 ou 88 par l'anneau 1 ne fait que le transit.
- Un noeud (J) recevant 64 par anneau 0 ou 80 par l'anneau 1 ne fait que la transit.

Le principe décrit ci-dessus est applicable à toute une variété d'architectures de réseaux dès lors que leurs tailles ne dépassent pas une certaine limité fixée par le nombre de codes possibles (dans cet exemple, 256 pour un champ VPI de 8 bits) et en tenant compte du degré de défense que l'on se fixe, c'est-à-dire de la résistance aux pannes, en d'autres termes du nombre de chemins de secours que l'on s'impose entre chaque couple de point d'accès, à l'initialisation du réseau.

Par exemple:
- dans une boucle à un seul anneau, un seul chemin possible.
- Dans une boucle à double anneau, 2 chemins possibles, donc 2 codes par noeud.
- Dans une structure constituée de 2 boucles à double anneau : 4 chemins possibles, donc 4 codes, etc...

Par ailleurs, les éléments de commutation utilisés dans le modèle décrit (matrices 4 x 4) permettent de bâtir des architectures de topologie diverses sur lesquelles le mécanisme décrit est également applicable :
a) boucle à 1 ou 2 anneaux
b) étages de matrices classiques, pour réaliser par exemple des unités de commutation 16 x 16
c) petites unités de commutation cascadées
d) unités de concentration de capacités variées structurées en étages de matrices.

De plus, le mécanisme est applicable avec des équipements de commutation de taille plus importante (par exemple des matrices 16 x 16). Son intérêt devient néanmoins plus difficile à justifier dans la mesure où ces équipements sont relativement volumineux (au moins une carte) et donc que la surface mémoire n'est plus un handicap. En outre, le nombre de messages nécessaires au marquage est très limité.

On peut également prévoir des architectures mettant en oeuvre divers types d'équipements, par exemple un coeur bâti autour de matrices 16 x 16 et des réseaux de distributions fondés sur des matrices 4 x 4.

### ANNEXE 1 :TABLES D'AFFECTATION DES CODES POUR LE MODÈLE CONSIDÉRÉ

Les codes identifiant les noeuds sur lesquels sont connectés des EPR ont été fixés arbitrairement comme suit.

| Nom du noeud MTX (voir figure 8) | i_a0 (code vu par l'anneau 0) | i_a1 (code vu par l'anneau 1) |
|---|---|---|
| B | 32 | 48 |
| C | 33 | 49 |
| D | 34 | 50 |
| E | 35 | 51 |
| F | 36 | 52 |
| G | 37 | 53 |
| H | 38 | 54 |
| K | 39 | 55 |
| L | 40 | 56 |
| M | 41 | 57 |
| N | 42 | 58 |
| P | 43 | 59 |
| R | 44 | 40 |
| S | 45 | 61 |

Ces codes sont valables pour chaque UCX.

Les MCX baptisées A et J sont les passerelles d'accès aux autres UCX.

Vus d'un noeud quelconque de l'UCXn par les anneaux 0, les noeuds de l'UCXn+1 possèdent les codes suivants :

| VPI | noeud visé | i_a0 du noeud visé |
|---|---|---|
| 96 | B | 32 |
| 97 | C | 33 |
| 98 | D | 34 |
| 99 | E | 35 |
| 100 | F | 36 |
| 101 | G | 37 |
| 102 | H | 38 |
| 103 | K | 39 |
| 104 | L | 40 |
| 105 | M | 41 |
| 106 | N | 42 |
| 107 | P | 43 |
| 108 | R | 44 |
| 109 | S | 45 |

Les traductions entre les codes d'origine (à gauche) et les codes d'arrivée (à droite) sont effectuées dans le noeud passerelle de l'UCXn qui relie l'UCXn à l'UCXn+1

Vus d'un noeud quelconque de l'UCXn par les anneaux 1, les noeuds de l'UCXn+1 possèdent les codes suivants :

| VPI | noeud visé | i_a1 du noeud visé |
|---|---|---|
| 112 | B | 48 |
| 113 | C | 49 |
| 114 | D | 50 |
| 115 | E | 51 |
| 116 | F | 52 |
| 117 | G | 53 |
| 118 | H | 54 |
| 119 | K | 55 |
| 120 | L | 56 |
| 121 | M | 57 |
| 122 | N | 58 |
| 123 | P | 59 |
| 124 | R | 60 |
| 125 | S | 61 |

Vus d'un noeud quelconque de l'UCXn par les anneaux 0, les noeuds de l'UCXn+2 possèdent les codes suivants :

| VPI | noeud visé | i_a0 du noeud visé |
|---|---|---|
| 460 | B | 32 |
| 160 + j | - | 32 + j |
| 173 | S | 45 |

Les traductions entre les codes d'origine (à gauche) et les codes d'arrivée (à droite) sont effectuées dans le noeud passerelle de l'UCXn qui relie l'UCXn+2.

Vus d'un noeud quelconque de l'UCXn par les anneaux 1, les noeuds de l'UCXn+2 possèdent les codes suivants :

| VPI | noeud visé | i_a1 du noeud visé |
|---|---|---|
| 176 | B | 48 |
| 176+j | - | 48 + j |
| 189 | S | 61 |

Aux différentes possibilités de routages proposées ci-dessus, on peut ajouter celles qui permettent le transit travers une UCX intermédiaire

Vus d'un noeud quelconque de l'UCXn par les anneaux 0, en transitant à travers l'UCXn+1, les noeuds de l'UCXn+2 possèdent les codes suivants :

| VPI | noeud visé | i_a0 du noeud visé | codes intermédiaires dans l'UCXn+1 |
|---|---|---|---|
| 128 | B | 32 | 96 |
| 128 + j | - | 32 + j | 96 + j |
| 141 | S | 45 | 109 |

Les traductions entre les codes d'origine (à gauche) et les codes intermédiaires (à droite) sont effectuées dans le noeud passerelle de l'UCXn qui relie l'UCXn à l'UCXn+1. Les traductions entre les codes intermédiaires et les codes d'arrivée (au milieu), sont effectuées dans le noeud passerelle de l'UCXn+1 qui relie l'UCXn+1 à 1' UCXn+2.

Vus d'un noeud quelconque de l'UCXn par les anneaux 0, en transitant à travers l'UCXn+2, les noeuds de l'UCXn+1 possèdent les codes suivants :

| VPI | noeud visé | i_a1 du noeud visé | codes intermédiaires dans l'UCXn+1 |
|---|---|---|---|
| 144 | B | 48 | 112 |
| 144 + j | - | 48 + j | 112 + j |
| 157 | S | 61 | 125 |

Vus d'un noeud quelconque de l'UCXn par les anneaux 0, en transitant à travers l'UCXn+2, les noeuds de l'UCXn+1 possèdent les codes suivants :

| VPI | noeud visé | i_a0 du noeud visé | codes intermédiaires dans l'UCXn+1 |
|---|---|---|---|
| 192 | B | 32 | 160 |
| 192 + j | - | 32 + j | 160 + j |
| 205 | S | 45 | 160 |

Vus d'un noeud quelconque de l'UCXn par les anneaux 1, en transitant à travers I'UCXn+2, les noeuds de l'UCXn+1 possèdent les codes suivants :

| VPI | noeud visé | i_a1 du noeud visé | codes intermédiaires dans l'UCXn+1 |
|---|---|---|---|
| 208 | B | 48 | 176 |
| 208 + j | - | 48 + j | 176 + j |
| 221 | S | 61 | 189 |

Dans tous les cas décrits ci-dessus, lorsqu'il s'agit de passer d'une UCX à une autre UCX, les cellules empruntent les mêmes numéros d'anneau. Le principe ne s'oppose pas à un changement d'anneau ; la contrainte n'étant qu'une consommation supplémentaire de codes. or, le nombre de codes disponible est défini par le nombre de bits du champ de l'entête utilisé à cet effet : dans notre exemple, il est de 8 puisque l'adresse d'auto-routage est supportée par le champ VPI. dans les tableaux ci-dessus, on constatera que la quasi-totalité des 256 codes est utilisée. Ajoutons que le changement d'anneau est une option qui, tout comme le transit à travers une UCX intermédiaire, se justifie parfaitement pour des raisons de sécurité de fonctionnement (reconfiguration en cas de pannes).

| Codes affectés à la diffusion | | |
|---|---|---|
| MCX | Diffusion sur anneau 0 | diffusion sur anneau 1 |
| A | 64 | 80 |
| B | 65 | 81 |
| C | 66 | 82 |
| D | 67 | 83 |
| E | 68 | 84 |
| F | 69 | 85 |
| G | 70 | 86 |
| H | 71 | 87 |
| J | 72 | 88 |
| K | 73 | 89 |
| L | 74 | 90 |
| M | 75 | 91 |
| N | 76 | 92 |
| P | 77 | 93 |
| R | 78 | 94 |
| S | 79 | 95 |

## Revendications

1. Procédé d'acheminement de données organisées en paquets de données, dans un réseau multisite d'échange de données organisées en paquets de données, du type comprenant au moins deux sites distants (11, 15) organisés chacun en sous-réseaux privés comprenant une pluralité de terminaux (121 à 12N) susceptibles d'émettre et/ou de recevoir des paquets, et interconnectés par l'intermédiaire d'un réseau public brassé (RPB), chacun desdits paquets comprenant un en-tête et un champ de données, ledit en-tête comprenant au moins deux identificateurs définissant, vu dudit réseau public, un double niveau de hiérarchie d'accès, un premier identificateur, dit identificateur de voie virtuelle (VCI), permettant le contrôle de la commutation des paquets dans les sous-réseaux privés, ainsi qu'un second identificateur, dit identificateur de conduit virtuel (VPI), permettant, dans ledit réseau public, le contrôle du brassage desdits paquets,
**caractérisé en ce qu'**on attribue audit identificateur de conduit virtuel (VPI) un double rôle:
- contrôle du brassage du paquet, lorsque celui-ci circule sur ledit réseau public ; et
- gestion d'un mécanisme de routage du paquet, lorsque celui-ci circule sur l'un desdits sous-réseaux privés,
**en ce que**, à chaque transfert d'un paquet d'un desdits sous-réseaux privés vers ledit réseau public, une donnée de routage (VP-Sa) contenue dans ledit identificateur de conduit virtuel (VPI) est décalée dans une portion réservée dudit identificateur de voie virtuelle (VCI), et remplacée par une donnée de contrôle de brassage (VP-Bx), et **en ce que**, à chaque transfert d'un paquet dudit réseau public vers un desdits sous-réseaux privés, ladite donnée de contrôle du brassage est effacée, et ladite donnée de routage contenue dans ladite portion réservée dudit identificateur de voie virtuelle est restaurée par décalage dans ledit identificateur de conduit virtuel.

2. Procédé selon la revendication 1, **caractérisé en ce que**
- ledit identificateur de conduit virtuel (VPI) est constitué de 12 bits, les quatre bits de poids fort étant forcés à une valeur prédéterminée ;
- ledit identificateur de voie virtuelle (VCI) est constitué de 16 bits, les huit bits de poids fort étant réservés pour le stockage de ladite donnée de routage.

3. Procédé selon l'une quelconque des revendications 1 et 2, **caractérisé en ce que** lesdits sites distants comprennent un site principal et au moins deux sites secondaires, et **en ce que** toute communication entre deux desdits sites secondaires transite par ledit site principal.

4. Procédé selon l'une quelconque des revendications 1 à 3, **caractérisé en ce que** les opérations de modification du contenu dudit identificateur de conduit virtuel sont réalisées de façon matérielle, dans des équipements d'interface (IRR, EPR-D) dédiés de chaque site.

5. Procédé selon l'une quelconque des revendications 1 à 4, **caractérisé en ce que** chaque sous-réseau privé comprend :
- une pluralité de noeuds de commutation (UCX1, UCX2, UCX3) reliés deux à deux par au moins un support d'échange de données, chacun desdits noeuds desservant un concentrateur (13) gérant chacun au moins un terminal de traitement de données (12) susceptible d'émettre et/ou de recevoir des paquets de données ;
- un module d'interface (IRR) assurant la connexion entre ledit sous-réseau privé et ledit réseau public,
et **en ce qu'**il comprend les étapes suivantes :
- émission d'un paquet de données par un terminal émetteur vers son concentrateur associé, dit concentrateur émetteur, à destination d'un terminal récepteur, ledit paquet portant un indicateur de voie virtuelle VCI local (VC-La) et un indicateur de conduit virtuel VPI local (VP-La) alloué par ledit terminal émetteur pour la durée d'une communication ;
- dans ledit concentrateur émetteur, traduction dudit indicateur de voie virtuelle VCI local en un indicateur de voie virtuelle VCI (VC-Sa) alloué par ledit terminal récepteur pour la durée d'une communication ;
- dans ledit concentrateur émetteur, traduction dudit indicateur de conduit virtuel VPI local en un indicateur de conduit virtuel VPI (VP-Sa) alloué de façon permanente audit terminal récepteur;
- si ledit terminal récepteur appartient au même sous-réseau que ledit terminal émetteur ;
- routage dudit paquet vers le concentrateur associé audit terminal récepteur, dit concentrateur récepteur, via lesdits noeuds de commutation, par analyse dudit indicateur de conduit virtuel VPI (VP-Sa) ;
- routage vers ledit terminal récepteur, par analyse dudit identificateur de voie virtuelle VCI (VC-Sa) dans ledit concentrateur récepteur;
- si ledit terminal récepteur appartient à un autre sous-réseau:
- routage dudit paquet vers le module d'interface du sous-réseau dudit terminal émetteur, via lesdits noeuds de commutation, par analyse dudit indicateur de conduit virtuel VPI (VP-Sa);
- dans ledit module d'interface, décalage du contenu dudit indicateur de conduit virtuel VPI (VP-Sa) dans une portion réservée du champ d'identificateur de voie virtuelle VCI et inscription dans le champ d'indicateur de conduit virtuel VPI d'une information (VP-Bx) de gestion du brassage sur le réseau public ;
- transmission par ledit module d'interface vers le sous-réseau dudit terminal récepteur dudit paquet, via ledit réseau public ;
- réception dudit paquet dans le module d'interface du sous-réseau dudit terminal récepteur ;
- dans ledit module d'interface, décalage du contenu de ladite portion réservée du champ d'identificateur de voie virtuelle VCI vers ledit indicateur de conduit virtuel VPI (VP-Sa) ;
- routage dudit paquet vers le concentrateur associé audit terminal récepteur, dit concentrateur récepteur, via lesdits noeuds de commutation, par analyse dudit indicateur de conduit virtuel VPI (VP-Sa) ;
- routage vers ledit terminal récepteur, par analyse dudit identificateur de voie virtuelle VCI (VC-Sa) dans ledit concentrateur récepteur.

6. Procédé selon l'une quelconque des revendications 1 à 5, **caractérisé en ce que** ladite donnée de routage placée dans ledit identificateur de conduit virtuel est un identifiant désignant au moins un terminal récepteur, chacun desdits terminaux possédant un identifiant qui lui est propre dans un sous-réseau donné, chaque sous-réseau comprenant au moins deux unités de commutation, chaque unité de commutation comprenant une pluralité de noeuds de commutation (UCX) reliés deux à deux par au moins un support d'échange de données et au moins un noeud de liaison (141) avec une autre unité de commutation, par l'intermédiaire d'une passerelle de liaison, et **en ce qu'**on associe à chaque noeud de commutation:
- une mémoire contenant au moins un groupe d'au moins un identifiant correspondant à un ensemble d'au moins un terminal associé audit noeud ;
- une matrice de commutation (MCX) associant au moins une entrée à au moins deux sorties, dont :
- au moins une première sortie correspondant à au moins une desdites stations associées audit noeud ; et
- au moins une seconde sortie correspondant au noeud suivant sur l'unité de commutation du noeud de commutation, et **en ce qu'**une matrice recevant un paquet sélectionne systématiquement une des secondes sorties, si l'identifiant du paquet ne correspond à aucun des identifiants contenus dans la mémoire, et une des premières sorties sinon.

7. Procédé selon l'une quelconque des revendications 1 à 5, caractérisé en ce ladite donnée de routage placée dans ledit identificateur de conduit virtuel est un identifiant désignant au moins un terminal récepteur dans un sous-réseau donné, chaque sous-réseau comprenant au moins deux unités de commutation, chaque unité de commutation comprenant une pluralité de noeuds de commutation reliés deux à deux par au moins un support d'échange de données et au moins un noeud de liaison avec une autre unité de commutation, par l'intermédiaire d'une passerelle de liaison, en ce qu'on associe à chaque noeud de commutation:
- une mémoire contenant au moins un groupe d'au moins un identifiant correspondant à un ensemble d'au moins un terminal associé audit noeud ;
- une matrice de commutation associant au moins une entrée à au moins deux sorties, dont :
- au moins une première sortie correspondant à au moins une desdites stations associées audit noeud ; et
- au moins une seconde sortie correspondant au noeud suivant sur ladite unité de commutation,
en ce qu'une matrice recevant un paquet sélectionne systématiquement une des secondes sorties, si l'identifiant du paquet ne correspond à aucun des identifiants contenus dans la mémoire, et une des premières sorties sinon ;
en ce que l'identifiant qui constitue ladite donnée de routage comprend deux parties :
- une première partie désignant l'unité de commutation destinataire ; et
- une seconde partie désignant le terminal destinataire dans ladite unité de commutation destinataire,
et en ce que, dans chaque noeud de liaison, on effectue les étapes suivantes
- analyse de ladite première partie, et
- si le paquet doit être transmis par ledit noeud de liaison vers une autre unité de commutation, modification en conséquence de ladite première partie, et transmission dudit paquet.

8. Procédé selon la revendication 7, **caractérisé en ce que** chaque unité de commutation exploite un même jeu d'identifiants, correspondant à ladite seconde partie, et **en ce qu'**on additionne aux dits identifiants une valeur prédéterminée, correspondant à ladite première partie, pour désigner l'unité de commutation destinataire.

9. Procédé selon l'une quelconque des revendications 7 et 8, **caractérisé en ce qu'**il prévoit au moins un identifiant permettant une diffusion du paquet considéré vers au moins deux terminaux récepteurs.

10. Réseau de communications, multisite, d'échange de données organisées en paquets de données, du type incluant au moins deux sites distants (11, 15) organisés chacun en sous-réseaux privés comprenant une pluralité de terminaux (121 à 12N) susceptibles d'émettre et/ou de recevoir des paquets, et interconnectés par l'intermédiaire d'un réseau public brassé (RPB), ledit réseau de communications mettant en oeuvre un procédé d'acheminement de données organisées en paquets, chaque paquet comprenant un en-tête et un champ de données, ledit en-tête comprenant au moins deux identificateurs correspondants aux dits terminaux et définissant, vu dudit réseau public, un double niveau de hiérarchie d'accès, un premier identificateur, dit identificateur de voie virtuelle (VCI), permettant le contrôle de la commutation des paquets dans les sous-réseaux privés, et un second identificateur, dit identificateur de conduit virtuel (VPI), permettant, dans ledit réseau public, le contrôle du brassage desdits paquets, ledit identificateur de conduit virtuel ayant un double rôle de contrôle du brassage du paquet, lorsque ce paquet circule sur ledit réseau public et de gestion d'un mécanisme de routage du paquet, lorsque ce paquet circule sur l'un desdits sous-réseaux privés, consistant à chaque transfert d'un paquet d'un desdits sous-réseaux privés vers ledit réseau public, à décaler une donnée de routage (VP-Sa) contenue dans ledit identificateur de conduit virtuel dans une portion réservée dudit identificateur de voie virtuelle, et à remplacer ladite donnée de
routage par une donnée de contrôle de brassage (VP-Bx), et, à chaque transfert d'un paquet dudit réseau public vers un desdits sous-réseaux privés, à effacer ladite donnée de contrôle du brassage, et à restaurer ladite donnée de routage contenue dans ladite portion réservée dudit identificateur de voie virtuelle par décalage dans ledit identificateur de conduit virtuel;
ledit réseau de communications comportant des unités de commutation, et étant **caractérisé en ce que** chacune de ces unités de commutation comprend une matrice de commutation (MCX) associée à une mémoire de stockage d'un jeu d'identifiants.

11. Réseau selon la revendication 10, **caractérisé en ce que** lesdites mémoires comprennent une table d'adressage figée.

12. Réseau selon l'une des revendications 10 ou 11, **caractérisé en ce qu'**au moins certaines desdites unités de commutation sont organisées selon une topologie à deux anneaux contrarotatifs.

## Claims

1. A method of forwarding data organized in data packets, in a multi-site data-interchange network for data organized in data packets, the network being of the type including at least two mutually distant sites (11, 15), each of which is organized in private sub-networks including a plurality of terminals (12₁ to 12_{N}) that are capable of transmitting and/or receiving packets, and that are interconnected via a distributed public network (RPB), each of said packets comprising a header and a data field, said header containing at least two identifiers defining two access hierarchy levels as seen from said public network, namely a first identifier referred to as the "virtual channel identifier" (VCI) enabling switching of the packets to be controlled in the private sub-networks, and a second identifier referred to as the "virtual path identifier (VPI) enabling distribution of said packets to be controlled in said public network;
said method being **characterized in that** two tasks are assigned to said virtual path identifier (VPI), namely:
- controlling distribution of the packet while it is travelling over said public network; and
- managing a routing mechanism for routing the packet while it is travelling over one of said private sub-networks;
**in that**, each time a packet is transferred from one of said private sub-networks to said public network, routing data (VP-Sa) contained in said virtual path identifier (VPI) is shifted to a reserved portion of said virtual channel identifier (VCI), and is replaced by distribution control data (VP-Bx);
and **in that**, each time a packet is transferred from said public network to one of said private sub-networks, said distribution control data is erased, and said routing data contained in said reserved portion of said virtual channel identifier is restored by being shifted to said virtual path identifier.

2. A method according to claim 1, **characterized in that**:
- said virtual path identifier (VPI) is constituted by 12 bits, the four most significant bits being forced to a predetermined value; and
- said virtual channel identifier (VCI) is constituted by 16 bits, the eight most significant bits being reserved for storing said routing data.

3. A method according to claim 1 or 2, **characterized in that** said mutually distant sites comprise a main site and at least two secondary sites, and **in that** any call between two of said secondary sites goes via said main site.

4. A method according to any one of claims 1 to 3, **characterized in that** the operations of modifying the contents of said virtual path identifier are performed physically in dedicated interface equipment (IRR, EPR-D) on each site.

5. A method according to any one of claims 1 to 4, **characterized in that** each private sub-network includes:
- a plurality of switching nodes (UCX1, UCX2, UCX3) connected together in pairs via at least one data interchange medium, each of said nodes serving a respective concentrator (13), each concentrator managing at least one data processing terminal (12) capable of transmitting and/or receiving data packets; and
- an interface module (IRR) providing the connection between said private sub-network and said public network;
and **in that** said method includes the following steps:
- a data packet is transmitted by a transmitter terminal to its associated concentrator, referred to as the "transmitter" concentrator, and on to a receiver terminal, said packet carrying a local virtual channel identifier VCI (VC-La) and a local virtual path identifier VPI (VP-La) allocated by said transmitter terminal for the duration of a call;
- said local virtual channel identifier VCI is translated in said transmitter concentrator into a virtual channel identifier VCI (VC-Sa) allocated by said receiver terminal for the duration of a call;
- said local virtual path identifier VPI is translated in said transmitter concentrator into a virtual path identifier VPI (VP-Sa) allocated permanently to said receiver terminal;
- if said receiver terminal belongs to the same sub-network as said transmitter terminal:
- said packet is routed to the "receiver" concentrator associated with said receiver terminal, via said switching nodes, by analyzing said virtual path identifier VPI (VP-Sa); and
- the packet is routed to said receiver terminal by analyzing said virtual channel identifier VCI (VC-Sa) in said receiver concentrator; and
- if said receiver terminal belongs to another sub-network:
- said packet is routed to the interface module of the sub-network of said transmitter terminal, via said switching nodes, by analyzing said virtual path identifier VPI (VP-Sa);
- in said interface module, the contents of said virtual path identifier VPI (VP-Sa) are shifted to a reserved portion of the virtual channel identifier VCI field, and management information (VP-Bx) concerning managing the distribution over the public network is written in the virtual path identifier VPI;
- said interface module transmits said packet to the sub-network of said receiver terminal via said public network;
- said packet is received in the interface module of the sub-network of said receiver terminal;
- in said interface module, the contents of said reserved portion of the virtual channel identifier VCI field are shifted to said virtual path identifier VPI (VP-Sa);
- said packet is routed to the "receiver" concentrator associated with said receiver terminal via said switching nodes, by analyzing said virtual path identifier VPI (VP-Sa); and
- said packet is routed to said receiver terminal, by analyzing said virtual channel identifier VCI (VC-Sa) in said receiver concentrator.

6. A method according to any one of claims 1 to 5, **characterized in that** said routing data placed in said virtual path identifier is an identifier designating at least one receiver terminal, each of said terminals having an identifier which is specific to it in a given sub-network, each sub-network comprising at least two switching units, each switching unit including a plurality of switching nodes (UCX) interconnected in pairs via at least one data interchange medium, and at least one link node (141) for linking to another switching unit, via a link bridge, and **in that** each switching node is associated with:
- a memory containing at least one group of at least one identifier corresponding to a set of at least one terminal associated with said node; and
- a switching matrix (MCX) associating at least one input with at least two outputs, namely:
- at least one first output corresponding to at least one of said stations associated with said node; and
- at least one second output corresponding to the following node on the switching unit of the switching node;
and **in that** a matrix receiving a packet systematically selects one of the second outputs if the identifier of the packet does not correspond to any of the identifiers contained in the memory, and one of the first outputs otherwise.

7. A method according to any one of claims 1 to 5, **characterized in that** said routing data placed in said virtual channel identifier is an identifier designating at least one receiver terminal in a given sub-network, each sub-network including at least two switching units, each switching unit including a plurality of switching nodes interconnected in pairs via at least one data interchange medium, and at least one link node for linking to another switching unit, via a link bridge,
**in that** each switching node is associated with:
- a memory containing at least one group of at least one identifier corresponding to a set of at least one terminal associated with said node; and
- a switching matrix associating at least one input with at least two outputs, namely:
· at least one first output corresponding to at least one of said stations associated with said node; and
· at least one second output corresponding to the following node on said switching unit;
**in that** a matrix receiving a packet systematically selects one of the second outputs if the identifier of the packet does not correspond to any of the identifiers contained in the memory, and one of the first outputs otherwise;
**in that** the identifier which constitutes said routing data comprises two portions:
- a first portion designating the destination switching unit; and
- a second portion designating the destination terminal in said destination switching unit;
and **in that**, in each link node, the following steps are performed:
- said first portion is analyzed; and
- if the packet is to be transmitted via said link node to another switching unit, said first portion is modified accordingly, and said packet is transmitted.

8. A method according to claim 7, **characterized in that** each switching unit uses the same set of identifiers, corresponding to said second portion, and **in that** a predetermined value is added to said identifiers, the predetermined value corresponding to said first portion, to designate the destination switching unit.

9. A method according to claim 7 or 8, **characterized in that** it provides at least one identifier enabling the packet in question to be broadcast to at least two receiver terminals.

10. A multi-site data-interchange communications network for data organized in data packets, the network being of the type including at least two mutually distant sites (11, 15), each of which is organized in private sub-networks including a plurality of terminals (12₁ to 12_{N}) that are capable of transmitting and/or receiving packets, and that are interconnected via a distributed public network (RPB), said communications network implementing a method of forwarding data organized in packets, each packet comprising a header and a data field, said header containing at least two identifiers corresponding to said terminals and defining two access hierarchy levels as seen from said public network, namely a first identifier referred to as the "virtual channel identifier" (VCI) enabling switching of the packets to be controlled in the private sub-networks, and a second identifier referred to as the "virtual path identifier (VPI) enabling distribution of said packets to be controlled in said public network; said virtual path identifier having two tasks, namely: controlling distribution of the packet while said packet is travelling over said public network; and managing a routing mechanism for routing the packet while said packet is travelling over one of said private sub-networks, the method consisting, each time a packet is transferred from one of said private sub-networks to said public network, in shifting routing data (VP-Sa) contained in said virtual path identifier to a reserved portion of said virtual channel identifier, and in replacing said routing data by distribution control data, and consisting, each time a packet is transferred from said public network to one of said private sub-networks, in erasing said distribution control data, and in restoring said routing data contained in said reserved portion of said virtual channel identifier by being shifted to said virtual path identifier;
said communications network including switching units, and being **characterized in that** each of the switching units includes a switching matrix (MCX) associated with a memory for storing a set of identifiers.

11. A network according to claim 10, **characterized in that** said memories include a fixed addressing table.

12. A network according to claim 10 or claim 11, **characterized in that** at least some of said switching units are organized using topography having two counter-rotary rings.

## Patentansprüche

1. Verfahren zum Befördern von in Datenpaketen organisierten Daten in einem verteilten Netz für den Austausch von in Datenpaketen organisierten Daten, vom Typ mit wenigstens zwei voneinander entfernten Orten (11, 15), die jeweils in private Unternetze mit einer Mehrzahl von Endgeräten (12₁ - 12_{N}) organisiert sind, die in der Lage sind, Pakete zu senden und/oder zu empfangen und über ein gemischtes öffentliches Netz (RPB) miteinander verbunden sind, wobei jedes der Pakete einen Header und ein Datenfeld umfasst, der Header wenigstens zwei Identifikatoren umfasst, die aus der Perspektive des öffentlichen Netzes gesehen ein doppeltes Zugangshierarchieniveau definieren, wobei ein erster Identifikator, als virtueller Kanalidentifikator (VCI) bezeichnet, die Steuerung der Vermittlung der Pakete in den privaten Unternetzen ermöglicht, und ein zweiter Identifikator, als virtueller Wegidentifikator (VPI) bezeichnet, in dem öffentlichen Netz die Steuerung der Mischung der Pakete ermöglicht,
**dadurch gekennzeichnet, dass** dem virtuellen Wegidentifikator (VPI) eine Doppelfunktion zugewiesen wird:
- Steuerung des Mischens des Paketes, wenn dieses auf dem öffentlichen Netz zirkuliert; und
- Verwaltung eines Routing-Mechanismus des Paketes, wenn dieses auf einem der privaten Unternetze zirkuliert,
und dass bei jedem Übergang eines Paketes von einem der privaten Unternetze zu dem öffentlichen Netz ein Routing-Datenwert (VP-Sa), der in dem virtuellen Wegidentifikator (VPI) enthalten ist, in einen reservierten Abschnitt des virtuellen Kanalidentifikators(VCI) verschoben und durch einen Mischungssteuerungsdatenwert (VP-Bx) ersetzt wird, und dass bei jedem Übergang eines Pakets von dem öffentlichen Netz zu einem der privaten Unternetze der Mischungssteuerungsdatenwert gelöscht wird und der in dem reservierten Abschnitt des virtuellen Kanalidentifikators enthaltene Routing-Datenwert durch Verschieben in den virtuellen Wegidentifikator wiederhergestellt wird.

2. Verfahren nach Anspruch 1, **dadurch gekennzeichnet, dass**
- der virtuelle Wegidentifikator (VPI) aus zwölf Bits besteht, wobei die vier hochwertigen Bits auf einen vorgegebenen Wert festgelegt sind;
- der virtuelle Kanalidentifikator (VCI) aus sechzehn Bits besteht, wobei die acht hochwertigen Bits für die Speicherung des Routing-Datenwerts reserviert sind.

3. Verfahren nach einem beliebigen der Ansprüche 1 und 2, **dadurch gekennzeichnet, dass** die entfernten Orte einen Hauptort und wenigstens zwei Sekundärorte umfassen, und dass jede Kommunikation zwischen den zwei Sekundärorten über den Hauptort läuft.

4. Verfahren nach einem beliebigen der Ansprüche 1 bis 3, **dadurch gekennzeichnet, dass** die Operationen des Veränderns des Inhalts des virtuellen Wegidentifikators materiell in dedizierten Schnittstellenvorrichtungen (IRR, EPR-D) jedes Ortes vorgenommen werden.

5. Verfahren nach einem beliebigen der Ansprüche 1 bis 4, **dadurch gekennzeichnet, dass** jedes private Unternetz umfasst:
- eine Mehrzahl von Vermittlungsknoten (UCX1, UCX2, UCX3), die paarweise über wenigstens einen Datenaustauschträger verbunden sind, wobei jeder der Knoten einen Konzentrator (13) bedient, der wenigstens ein Datenverarbeitungsendgerät (12) verwaltet, das in der Lage ist, Daten zu senden und/oder zu empfangen;
- ein Schnittstellenmodul (IRR), das die Verbindung zwischen dem privaten Unternetz und dem öffentlichen Netz gewährleistet,
- und dass es die folgenden Schritte umfasst:
- Senden eines Datenpaketes durch ein Senderendgerät zu seinem zugeordneten Konzentrator, als Senderkonzentrator bezeichnet, mit dem Ziel eines Empfängerendgeräts, wobei das Paket einen lokalen virtuellen Kanalidentifikator VCI (VC-La) und einen lokalen virtuellen Wegidentifikator VPI (VP-La) trägt, der vom Senderendgerät für die Dauer einer Kommunikation. zugeteilt ist;
- in dem Senderkonzentrator, Übersetzen des virtuellen Kanalidentifikators VCI in einen virtuellen Wegidentifikator VCI (VC-Sa), der von dem Empfängerendgerät für die Dauer einer Kommunikation zugeteilt ist;
- in dem Senderkonzentrator, Übersetzen des lokalen virtuellen Wegidentifikators VPI in einen dem Empfängerendgerät permanent zugeteilten virtuellen Wegidentifikator VPI (VP-Sa);
- wenn das Empfängerendgerät zum gleichen Unternetz wie das Senderendgerät gehört:
- Routen des Pakets zum dem Empfängerendgerät zugeordneten Konzentrator, als Empfängerkonzentrator bezeichnet, über die Vermittlungsknoten durch Analyse des virtuellen Wegidentifikators VPI (VP-Sa);
- Routen zum Empfängerendgerät durch Analyse des virtuellen Kanalidentifikators VCI (VC-Sa) in dem Empfängerkonzentrator;
- wenn das Empfängerendgerät zu einem anderen Unternetz gehört:
- Routen des Pakets zu dem Schnittstellenmodul des Unternetzes des Senderendgerätes über die Vermittlungsknoten durch Analyse des virtuellen Wegidentifikators VPI (VP-Sa);
- in dem Schnittstellenmodul, Verschieben des Inhalts des virtuellen Wegidentifikators VPI (VP-Sa) in einen reservierten Abschnitt des virtuellen Kanalidentifikatorfeldes und Eintragen einer Information (VP-Bx) zur Verwaltung des Mischens auf dem öffentlichen Netz in das virtuelle Wegidentifikatorfeld VPI;
- Übertragen des Pakets von dem Schnittstellenmodul zu dem Unternetz des Empfärigerendgerätes über das öffentlichen Netz;
- Empfangen des Paketes in dem Schnittstellenmodul des Unternetzes des Empfängerendgerätes;
- in dem Schnittstellenmodul, Verschieben des Inhalts des reservierten Abschnitts des virtuellen Kanalidentifikatorfeldes VCI zu dem virtuellen Wegidentifikator VPI (VP-Sa);
- Routen des Pakets zum dem Empfängerendgerät zugeordneten Konzentrator, als Empfängerkonzentrator bezeichnet, über die Vermittlungsknoten durch Analyse des virtuellen Wegidentifikators VPI (VP-Sa);
- Routen zum Empfängerendgerät durch Analyse des virtuellen Kanalidentifikators VCI (VC-Sa) in dem Empfängerkonzentrator.

6. Verfahren nach einem beliebigen der Ansprüche 1 bis 5, **dadurch gekennzeichnet, dass** der in dem virtuellen Wegidentifikator platzierte Routing-Datenwert ein Identifizierer ist, der wenigstens ein Empfängerendgerät bezeichnet, wobei jedes der Empfängerendgeräte einen Identifizierer besitzt, der für es in einem gegebenen Unternetz spezifisch ist, wobei jedes Unternetz wenigstens zwei Vermittlungseinheiten umfasst und jede Vermittlungseinheit eine Mehrzahl von Vermittlungsknoten (UCX) umfasst, die paarweise über wenigstens einen Datenaustauschträger und wenigstens einen Verbindungsknoten (141) zu einer anderen Vermittlungseinheit über eine Verbindungsbrücke verbunden sind, und dass jedem Vermittlungsknoten zugeordnet werden:
- ein Speicher, der wenigstens eine Gruppe mit wenigstens einem Identifizierer enthält, der einer Menge von wenigstens einem dem Knoten zugeordneten Endgerät entspricht;
- eine Vermittlungsmatrix (MCX), die wenigstens einen Eingang wenigstens zwei Ausgängen zuordnet, von denen:
- wenigstens ein erster Ausgang wenigstens einer der dem Knoten zugeordneten Stationen entspricht, und
- wenigstens ein zweiter Ausgang dem Knoten entspricht, der auf die Vermittlungseinheit des Vermittlungsknotens folgt,
und dass eine Matrix, die ein Paket empfängt, systematisch einen der zweiten Ausgänge auswählt, wenn der Identifizierer des Pakets keinem der im Speicher enthaltenen Identifizierer entspricht, und anderenfalls einen der ersten Ausgänge auswählt.

7. Verfahren nach einem beliebigen der Ansprüche 1 bis 5, **dadurch gekennzeichnet, dass** der im virtuellen Wegidentifikator platzierte Routing-Datenwert ein Identifizierer ist, der wenigstens ein Empfängerendgerät in einem gegebenen Unternetz identifiziert, wobei jedes Unternetz wenigstens zwei Vermittlungseinheiten umfasst, jede Vermittlungseinheit eine Mehrzahl von Vermittlungsknoten (UCX) umfasst, die paarweise über wenigstens einen Datenaustauschträger und wenigstens einen Verbindungsknoten zu einer anderen Vermittlungseinheit über eine Verbindungsbrücke verbunden sind, und dass jedem Vermittlungsknoten zugeordnet werden:
- ein Speicher, der wenigstens eine Gruppe mit wenigstens einem Identifizierer umfasst, der einer Menge von wenigstens einem dem Knoten zugeordneten Endgerät entspricht;
- eine Vermittlungsmatrix (MCX), die wenigstens einen Eingang wenigstens zwei Ausgängen zuordnet, von denen:
- wenigstens ein erster Ausgang wenigstens einer der dem Knoten zugeordneten Stationen entspricht, und
- wenigstens ein zweiter Ausgang dem auf die Vermittlungseinheit folgenden Knoten entspricht, und dass eine Matrix, die ein Paket empfängt, systematisch einen der zweiten Ausgänge auswählt, wenn der Identifizierer des Pakets keinem der im Speicher enthaltenen Identifizierer entspricht, und sonst einen der ersten Ausgänge auswählt,
und dass der Identifizierer, der den Routing-Datenwert bildet, zwei Abschnitte umfasst:
- einen ersten Abschnitt, der die Empfänger-Vermittlungseinheit bezeichnet, und
- einen zweiten Abschnitt, der das Empfängerendgerät in der Empfänger-Vermittlungseinheit bezeichnet,
und dass in jedem Verbindungsknoten die folgenden Schritte durchgeführt werden:
- Analyse des ersten Abschnitts, und
- wenn das Paket von dem Verbindungsknoten zu einer anderen Vermittlungseinheit übertragen werden muss, entsprechende Änderung des ersten Abschnitts und Übertragung des Paketes.

8. Verfahren nach Anspruch 7, **dadurch gekennzeichnet, dass** jede Vermittlungseinheit einen gleichen Satz von Identifizierern nutzt, die dem zweiten Abschnitt entsprechen, und dass zu den Identifizierern ein vorgegebener Wert, der dem ersten Abschnitt entspricht, hinzuaddiert wird, um die Empfänger-Vermittlungseinheit zu bezeichnen.

9. Verfahren nach einem beliebigen der Ansprüche 7 und 8, **dadurch gekennzeichnet, dass** wenigstens ein Identifizierer vorgesehen wird, der eine Verbreitung des betreffenden Pakets zu wenigstens zwei Empfängerendgeräten ermöglicht.

10. Verteiltes Kommunikationsnetz zum Austausch von in Datenpaketen organisierten Daten, vom Typ mit wenigstens zwei voneinander entfernten Orten (11, 15), die jeweils in private Unternetze organisiert sind und eine Mehrzahl von Endgeräten (12₁ - 12_{N}) umfassen, die in der Lage sind, Pakete zu senden und/oder zu empfangen und die über ein gemischtes öffentliches Netz (RPB) verbunden sind, wobei das Kommunikationsnetz ein Verfahren zur Beförderung von in Paketen organisierten Daten einsetzt, bei dem jedes Paket einen Header und ein Datenfeld umfasst, der Header wenigstens zwei Identifikatoren, die den Endgeräten entsprechen, umfasst und aus der Perspektive des öffentlichen Netzes gesehen ein doppeltes Zugangshierarchieniveau definiert, wobei ein erster Identifikator, als virtueller Kanalidentifikator (VCI) bezeichnet, die Steuerung der Vermittlung der Pakete in den privaten Unternetzen ermöglicht und ein zweiter Identifikator, als virtueller Wegidentifikator (VPI) bezeichnet, in dem öffentlichen Netz die Steuerung der Mischung der Pakete ermöglicht, wobei der virtuelle Wegidentifikator eine doppelte Funktion der Steuerung des Mischens des Paketes, wenn das Paket auf dem öffentlichen Netz zirkuliert, und der Verwaltung eines Routing-Mechanismus des Paketes hat, wenn das Paket auf einem der privaten Unternetze zirkuliert, welcher darin besteht, bei jedem Übergang eines Paketes von einem der privaten Unternetze zu dem öffentlichen Netz einen Routing-Datenwert (VP-Sa), der in dem virtuellen Wegidentifikator (VPI) enthalten ist, in einen reservierten Abschnitt des virtuellen Kanalidentifikators zu verschieben und den Routing-Datenwert durch einen Mischungssteuerungsdatenwert (VP-Bx) zu ersetzen und bei jeder Übertragung eines Pakets von dem öffentlichen Netz zu einem der privaten Unternetze den Mischungssteuerungsdatenwert zu löschen und den in dem reservierten Abschnitt des virtuellen Kanalidentifikators enthaltenen Routing-Datenwert durch Verschieben in den virtuellen Wegidentifikator wiederherzustellen;
wobei das Kommunikationsnetz Vermittlungseinheiten umfasst und **dadurch gekennzeichnet ist, dass** jede dieser Vermittlungseinheiten eine Vermittlungsmatrix (MCX) in Verbindung mit einem Speicher zum Speichern eines Satzes von Identifizierern umfasst.

11. Netz nach Anspruch 10, **dadurch gekennzeichnet, dass** die Speicher eine festgelegte Adressierungstabelle umfassen.

12. Netz nach einem der Ansprüche 10 oder 11, **dadurch gekennzeichnet, dass** wenigstens bestimmte der Vermittlungseinheiten in einer Topologie mit zwei gegenläufigen Ringen organisiert sind.
